# EUROPEAN PATENT APPLICATION

(11) **EP 4 129 947 A2**
(43) Date of publication of application: **08.02.2023**
(21) Application number: 22188824.1
(22) Date of filing: 04.08.2022
(51) Int. Cl.: C04B 24/36, C04B 28/02, C04B 28/04, C04B 28/08, C08L 95/00

(54) **MIXTURE FOR THE REALIZATION OF STRUCTURAL AND INFRASTRUCTURAL PRODUCTS**

(30) Priority: 06.08.2021 IT 202100021440
(71) Applicant: CVR S.r.l., 06024 Gubbio (PG) (IT)
(72) Inventor: Barbetti, Stefano, 06024 Gubbio PG (IT); Kock Petersen, Jesper, 06024 Gubbio PG (IT); Barbetti, Davide, 06024 Gubbio PG (IT)
(74) Representative: Di Giovine, Paolo

(57) **Abstract**

The present invention relates to a mixture based on a combination of bituminous and cement for the realization of structural and infrastructural products as well a process for the preparation thereof.

## Description

### Technical field

The present invention relates to a mixture for the realization of structural and infrastructural products as well as a process for the preparation thereof.

### State of art

The production of structural and infrastructural elements requires the use of suitable binder mixtures which could confer wished physical-mechanical features to the resulting materials, so as to guarantee an optimum operation and behaviour thereof under operating conditions.

The conventional binder mixtures generally are mixed with water so as to obtain a mouldable mixture. Said mixtures, once moulded according to the wished form, are subjected to a curing process.

A first type of binder mixtures commonly used in the field of the infrastructures is represented by the "bituminous/mineral" mixtures, that is mixtures comprising a bituminous component, such as asphalt, foamed bitumen, or bitumen in emulsion, which are suitable to keep aggregates and inert materials so as to obtain bituminous conglomerates. These mixtures are used in particular for the construction of surfaces accessible to vehicles, for example, road and airport surfaces, for collaborative multilayer packages with varied features.

The use of bituminous components, after a certain time interval required for completing the mixture curing process, may confer a significant mechanical resistance to the final conglomerate, which is particularly useful to keep possible stresses induced by static or dynamic loads under the operating conditions. The bituminous component may confer even other properties to the conglomerate, for example linked to the chemical-physical nature of the bitumen itself, such as water repellence, elasticity, acceptable levels of plastic before reaching the break point, etcetera.

It is known in the art that the above-mentioned properties can be improved thanks to the addition of special additive substances to the bituminous mixture, such as, for example, styrene-butadiene-styrene (SBS) polymers, poly-vinyl-chloride (PVC), ataptic polypropylene, (APP), or other thermoplastic polymers. The so modified bituminous mixtures are even known as "modified" or "additivated" mixtures.

Despite the several advantages linked to the use of bituminous mixtures, there are also important disadvantages in particular due to the nature of bitumen.

A first disadvantage derives from the reduced capability of bitumen to accept loads at high temperatures, since the bituminous component tends to soften as the temperature increases. Consequently, at high temperatures, especially in the summer season when the temperature of the road surface exceeds the sixty decrees, the pressures exerted by the loads acting usually on the infrastructural materials under operating conditions may cause very pronounced deformations, until compromising the functionality of the same material or even the break thereof.

A second disadvantage is linked to the fact that, under conditions of exposure to the sun and air, a bituminous mixture inevitably encounters oxidation phenomena. These phenomena determine the evaporation of the aromatic and aliphatic fractions of the bituminous component, with consequent alteration of the mixture chemical stability. In particular, the dispersion in atmosphere of the aromatic and aliphatic components involves important risks for the health and environment, these being harmful for all forms of life. These phenomena can lead to a progressive degradation of the mechanical properties of the conglomerate which, under the action of the stress loads, become thinner until formation of breaks.

A second type of mixtures known in the field of the infrastructures are the "hydraulic/cement" mixtures, that is mixtures comprising a hydraulic binder such as cement, but even cement mortars or the like, suitable to keep aggregates or inert materials so as to form cement conglomerates such as concretes or the like. The cement, by reacting with water during the hydration process, is capable of conferring a considerable mechanical compression strength to the resulting conglomerate, which strength is particular useful in the production of materials which have to sustain this type of stress.

Analogously to the "bituminous/mineral" mixtures, the "hydraulic/cement" mixtures have several disadvantages deriving from the physical-chemical nature of the cement as well as from the high number of variables involved in the processing for the hydration and curing of the cement conglomerates. In fact, the variables influencing the mechanical performance of the cement conglomerates are several and mainly relate to the "clinker" composition, the fineness of the same cement and the used application methods. All these variables are difficult to be controlled, by making it difficult to diversify the production processes and to obtain conglomerates having distinct mechanical features which can be adapted to different uses.

In fact, whereas the "cement" mixtures are particularly suitable to the production of structural components requiring high compression forces such as, for example, foundations and pillars, on the contrary they result less suitable to implement road surfaces. The road surfaces, in fact, due to the greater shear stresses they are subjected to, together with the thermal expansion, require a certain structural flexibility. Due to the high stiffness of the cement conglomerate, a road surface implemented with a material of this type requires the integration of expansion joints conferring the flexibility required to face the above-mentioned stresses. The expansion joints, both due to their nature and to the poor quality and reduced maintenance, represent privileged points for the infiltration of rain water below the road surface, with negative consequences.

Another disadvantage linked to the use of cement conglomerates in the construction of road surfaces derives from a low resistance of the most external layer of the road surface to the atmospheric phenomena, as well as to shock phenomena, "pop-out" phenomena, that is phenomena of capillary rise of the Salts present in the ground, which penetrate the concrete and, by favouring the expansion thereof, increase the pressure in the upper portion of the road surface, by causing the expulsion of the cement portion. All these phenomena translate into a gradual consumption of the concrete layer covering the inert materials, by exposing the latter to the direct action of the atmospheric phenomena and to the action of the tyres, and then, to a gradual degradation due both to phenomena of acid rain carbonation and resistance to sliding.

A possibility to overcome the previously listed disadvantages is based upon the combination of the conventional bituminous and cement mixtures. An example is given by the use of bituminous and cement mixtures for the construction of road surfaces. Generally, the above-mentioned mixtures are added in subsequent steps of the material production process; for example, in the production of grouted macadam, the cement mixture is deposited inside a layer of asphalt previously implemented by using a bituminous mixture.

However, the combination of the two mixtures involves a series of disadvantages and problems too, since the production process in this case requires several steps and particularly laborious and expensive processing techniques.

### Summary of the invention

The technical problem underlying the present invention consists in overcoming one or more of the disadvantages mentioned with reference to the known art. Preferred features of the present invention are set forth in the dependent claims.

The invention in particular provides a mixture for the realization of structural and infrastructural products according to claim 1, comprising inert granular materials, a bituminous binder, that is a bituminous emulsion, and a hydraulic binder component. Advantageously, the hydraulic binder component used in the mixture of the invention is obtained by means of pre-mixing cement with one or more auxiliary materials, as defined in the present description, and with one or more thermoplastic polymers in a quantity by weight, calculated with respect to the total weight of the hydraulic binder compound, comprised between 1 and 5%.

Advantageously, in a preferred embodiment of the invention, said mixture comprises environmental friendly materials such as recycled inert materials and/or recovery slags in combination with recovery Roman cement, thereto polymers are added which are capable of conferring greater elasticity to the hydraulic binder compound.

As clearly shown by the results of the standard tests reported in the experimental section of the present description, the authors of the invention have surprisingly found that the use of hydraulic binder obtained by pre-mixing cement and one or more auxiliary materials with one or more polymers as defined in the present description and in claims, confers to the resulting materials, in particular to surfaces accessible to vehicles, an excellent resistance to fatigue and fracture as well as better elasticity and durability.

Surprisingly, the presence of said one or more polymers in the hydraulic binder compound, in particular in the amounts shown in the present description and in claims, allows to obtain structural and/or infrastructural materials/products having elastic properties as well as resistance to fatigue significantly improved with respect to materials prepared with mixtures containing conventional hydraulic biners known in the art, for example cement-based binder compounds which do not provide the addition of the above-mentioned polymers, or with respect to materials prepared with mixtures providing the addition of the above-mentioned polymers inside the bituminous emulsion.

The use of a mixture according to any one of the embodiments of the present invention then allows to obtain structural and/or infrastructural products or elements having a better force and elasticity, features which can be advantageously modulated based upon the intended use of the product itself.

One of the main advantages linked to the use of a mixture according to the present invention then is represented by a high versatility: by varying the amount and type of components of the mixture of the invention, according to the indications provided in the present description, it is possible to implement structural and/or infrastructural products such as road surfaces, wear layers, binder, aprons-ports-freight terminals and first elevation structures, with high performances, in particular in seismic risk areas.

The possibility of "cold" applying the mixture, the invention relates to, with respect to the usual "hot" (170 °C) practice requiring a greater energy expenditure and generates huge emissions, does not create fume and does not cause dispersion of aliphatic compounds in the environment, notoriously toxic compounds for the road operators: this represents an additional important advantage from an ecological point of view. Moreover, since it results liquid, the product obtainable by using the mixture, the present invention relates to, is self-levelling.

Thanks to the simplicity and convenience for the herein provided process for the production of mixtures according to the present invention, the structural and/or infrastructural materials obtainable starting from the above-mentioned mixture can be produced in a quick, economic and effective way.

Additional features and advantages of the different aspects of the present invention will result evident in the following detailed description of the preferred embodiments of the same and from the figures. The preferred embodiments of the herein described invention are meant as exemplifying some aspects of the invention and then they are not to be considered as limiting the protection scope of the same.

### Brief description of figures

The present invention and the following detailed description of preferred embodiments thereof can be better understood in the light of the following figures:
Figure 1 - results of UNI EN 12697-26 standard test
Figure 2 - results of UNI EN 12697-24 standard test
Figure 3 - the image shows a product obtainable by using a mixture according to the present invention, having the composition shown in Table 6a or 37.
Figure 4 - the image shows a product obtainable by using a mixture according to the present invention, having the composition shown in Table 6a or 37 after a rainy day.

### Glossary

If not differently designated, all technical and scientific terms used in the present description have the meaning commonly used in the technical field thereto the invention belongs.

The expression "structural and/or infrastructural products" used in the context of the present invention, comprises all products, materials and/or surfaces related to the field of the constructions, such as, in particular, roads or road surfaces, paving, wear layers, binder, aprons-ports-freight terminals, first elevation structures, beams and pillars, prefabricated or cast-on-site slabs, integrative restoration for laying of electrical cables, optical fibres and pipelines in general, water-repellent levels and shaves, protective and deformable plasters and paints, filling of joints on prefabricated structures.

In any point of the present description, the terms "comprising" or "comprises" can be replaced by the terms "consisting" of "consists of".

In any point of the present description, the term "about", has the meaning of approximatively, and it involves more or less 10% of the value or of the range of shown values.

### Detailed description

Different embodiments of the invention will be described hereinafter. It is to be meant that the features of the different embodiments can be combined, if compatible. Generally, subsequent embodiments will be described only with reference to the differences with respect to the previously described embodiments.

As mentioned, the present invention firstly relates to a mixture for the realization of structural and/or infrastructural products, comprising:
- one or more inert granular materials in a quantity by weight, determined with respect to the total weight of the mixture, comprised between 45 and 80% or between 50 and 80%, preferably comprised between 60 and 75%, still more preferably comprised between 62 and 68%;
- a hydraulic binder compound in a quantity by weight, determined with respect to the total weight of the mixture, comprised between 20 and 45% or between 20 and 30%, preferably comprised between 23 and 29%; and
- a bituminous emulsion in a quantity by weight, determined with respect to the total weight of the mixture, comprised between 2 and 14%, preferably comprised between 4 and 13%, still more preferably comprised between 5 and 11%;

wherein said hydraulic binder compound comprises at least the following components: (i) cement and optionally calcium hydroxide in a quantity by weight, determined with respect to the total weight of said hydraulic binder compound, comprised between 4 and 60%;
   (ii) one or more thermoplastic polymers in a quantity by weight, determined with respect to the total weight of said hydraulic binder compound, comprised between 1% and 5%; and
   (iii) one or more auxiliary materials comprising at least one among: sand, pozzolana, silica, limestone, cellulose, silica fume, fine slag, corn starch, rice starch, potato starch, fibres, fluorine or phosphate salts, sodium chloride or combinations thereof, in a quantity by weight, determined with respect to the total weight of said hydraulic binder compound, comprised between 40 and 95%; and
wherein said one or more thermoplastic polymers are homopolymers or copolymers formed by monomers selected in the group comprising vinyl acetate, ethylene, vinyl versatate, styrene, butadiene, and/or mixtures thereof, preferably wherein said one or more polymers are copolymers of ethylene and vinyl acetate or copolymers of ethylene, vinyl acetate and vinyl versatate.

The invention further relates to a mixture for the realization of structural and/or infrastructural products, comprising:
- one or more inert granular materials in a quantity by weight, determined with respect to the total weight of the mixture, comprised between 45 and 70%, preferably comprised between 48 and 66%, still more preferably comprised between 50 and 62%;
- a hydraulic binder compound in a quantity by weight, determined with respect to the total weight of the mixture, comprised between 20 and 45%, preferably comprised between 30 and 40%; and
- a bituminous emulsion in a quantity by weight, determined with respect to the total weight of the mixture, comprised between 2 and 14%, preferably comprised between 4 and 13%, still more preferably comprised between 5 and 11%;

wherein said hydraulic binder compound comprises at least the following components: (i) cement and optionally calcium hydroxide in a quantity by weight, determined with respect to the total weight of said hydraulic binder compound, comprised between 4 and 60%;
   (ii) one or more thermoplastic polymers in a quantity by weight, determined with respect to the total weight of said hydraulic binder compound, comprised between 1% and 5%; and
   (iii) one or more auxiliary materials comprising at least one among: sand, pozzolana, silica, limestone, cellulose, silica fume, fine slag, corn starch, rice starch, potato starch, fibres, fluorine or phosphate salts, sodium chloride or combinations thereof, in a quantity by weight, determined with respect to the total weight of said hydraulic binder compound, comprised between 40 and 95%; and
wherein said one or more thermoplastic polymers are homopolymers or copolymers formed by monomers selected in the group comprising vinyl acetate, ethylene, vinyl versatate, styrene, butadiene, and/or mixtures thereof, preferably wherein said one or more polymers are copolymers of ethylene and vinyl acetate or copolymers of ethylene, vinyl acetate and vinyl versatate.

### Inert granular materials

Under the term "inert granular materials", according to the present invention, granular materials generally used in the field of constructions or infrastructures are designated, which may have a nature of siliceous, limestone, or basaltic, spherical, crumbled or crushed type.

Said inert granular materials may be natural, industrial and/or recycled. The natural inert granular materials are aggregates of mineral origin which can be subjected to processes of mechanical nature, whereas the industrial materials are materials of mineral origin however deriving from industrial manufacturing processes, involving for example a process of thermal treatment or the like.

In an embodiment of the invention, said inert granular materials are mineral granular materials such as sand, silica, quartz, basalts, fragments of carbonate rock, vermiculite, lignin, glass spheres, ceramic spheres, organic materials like hemp and wheat processing waste in general.

Advantageously, inert granular materials suitable to be used for the preparation of a mixture according to any one of the herein described embodiments, can include even recovery materials such as for example: tire carcasses, rubble or fragments originating from demolition processes of buildings, structures made of reinforced concrete or from recycling of concrete production waste in the factories producing prefabricated manufacts as well as the whole circular economy material coming from milled products. According to a preferred aspect of the invention, the mixture according to any one of the herein described embodiments, comprises one or more inert granular materials selected among crushed materials, preferably crushed sand and/or crushed ballast. According to an aspect of the invention, the sand used as inert granular material in any one of the mixtures of the present invention, comprises aggregates of "fine" nature, for example aggregates consisting at least by approximately 85% of granules having sizes equal or lower than 5 mm, preferably equal or lower than 4 mm.

By definition, the crushed ballast is a construction aggregate. It can be obtained by means of extraction from a suitable rock formation followed by treatment in a crushing plant to reduce the rock in reduced sizes. The crushed ballast differentiates from gravel, since the latter has a more rounded shape and it is produced by means of natural processes linked to the action of atmospheric agents and erosion.

In a preferred embodiment of the invention, the granular inert materials usable for the preparation of the herein described mixtures include crushed sand and crushed ballast, preferably sand with granulometry comprised between 0-4 mm (in the present description even designated as "crushed sand 0/4" or "fine aggregate") and crushed ballast (herein designated even as "coarse aggregate"), with granulometry comprised between 4-8 mm (or "ballast 4/8") and with granulometry comprised between 10-16 mm (or "ballast 10/16").

In a preferred embodiment of the invention, any herein described mixture can include inert granular materials consisting of quarry and/or recycled anti-wear material (silica or quartz), in particular having a maximum size equal to 8 mm (like fine milled material).

### Hydraulic binder compound

As previously mentioned, under the term "hydraulic binder compound" in the context of the present description a cement-based mixture is meant, preferably obtained at least by means of a step of pre-mixing (i) cement and optionally calcium hydroxide, in a quantity by weight, determined with respect to the total weight of said hydraulic binder compound, comprised between 4 and 60% with (ii) one or more thermoplastic polymers in a quantity by weight, determined with respect to the total weight of the hydraulic binder compound, comprised between 1% and 5%, and with (iii) one or more auxiliary materials comprising at least one among: sand, pozzolana, silica, limestone, cellulose, silica fume, fine slag, corn starch, rice starch, potato starch, fibres, fluorine or phosphate salts, sodium chloride or combinations thereof, for example at least one among the auxiliary materials shown in tables 1-6, in a quantity by weight, determined with respect to the total weight of said hydraulic binder compound, comprised between 40 and 95%.

The hydraulic binder compound according to the invention is a material which premixed with water develops adhesive properties (hydraulic properties).

Not limiting examples of cements which can be used for the preparation of a hydraulic binder compound according to the present invention include types of cement commonly used in the field of the constructions, such as Portland cement (type I), Portland composite cement (type II), blast furnace cement with blast furnace slag (type III), pozzolanic cement (type IV), composite cement (type V) obtained by simultaneous addition of clinker of Portland cement, blast furnace slag and pozzolanic material, or combinations thereof.

Preferably, for the preparation of a hydraulic binder compound according to any one of the herein described embodiments, white cement and/or aluminous cement could be used.

In an embodiment according to the present invention, said cement is a cement preferably belonging to the resistance class 42.5 or 52.5. As it is known to a person skilled in the art, the cement belonging to a determined resistance class, among the above-mentioned ones, is established mainly by the values of mechanical resistance to compressions obtained on mortar specimens packaged and kept according to the procedures provided by EN 196-1 standard. The numerical abbreviation represents the N/mm² value of the compression breaking stress obtained after 28 days and this independently from the fact that the cement results to have normal (N) hardening or rapid (R) hardening or slow (L) hardening.

According to an embodiment, for the preparation of a hydraulic binder compound according to any one of the herein described embodiments, a normal cement or a quick-setting cement, a natural cement or cement with additives could be used.

According to a particularly preferred embodiment of the invention, in said hydraulic binder compound, the "Roman cement" is implemented. The term "Roman cement" in the context of the present description relates to a natural hydraulic binder, since fabricated mainly by baking between 800 and 1000°C of limestones with regular composition, extracted in homogenous banks and ground very finely.

In a preferred embodiment of the mixture according to the present invention, said hydraulic binder compound includes cement according to any one of the previously described embodiments, in an amount equal to approximately 5% by weight, determined with respect to the total weight of said hydraulic binder compound.

According to an additional preferred aspect of the invention, the hydraulic binder compound used for the preparation of a mixture according to any one of the herein described embodiments, comprises said one or more thermoplastic polymers in a quantity by weight, evaluated with respect to the total weight of the hydraulic binder compound, comprised between 1 and 3%, preferably equal to 1%, or 1.4%, or still more preferably equal to 1.5 or 2%.

As previously mentioned, said one or more thermoplastic polymers are homopolymers or copolymers formed by monomers selected in the group comprising vinyl acetate, ethylene, vinyl versatate, styrene, butadiene, and/or mixtures thereof. This list of monomers is exclusively exemplifying and it is not to be meant as limiting.

Preferably, said one or more thermoplastic polymers are copolymers of ethylene and vinyl acetate or copolymers of ethylene, vinyl acetate and vinyl versatate.

According to an aspect of the invention, the hydraulic binder compound usable for the preparation of any one of the mixtures according to the present invention comprises one or more thermoplastic polymers, preferably homopolymers or copolymers formed by monomers selected among the previously exemplified ones, in form of re-dispersible powder. Not limiting examples of polymer-based re-dispersible powders which are available commercially and can be used for the preparation of the hydraulic binder compound of any one of the mixtures according to the present invention include: (i) the compound known with the trade name ELOTEX^{®} FX3300, that is a re-dispersible polymeric binder based on vinyl acetate, vinyl versatate and ethylene, having an apparent specific weight comprised between 400-600 g/l, maximum residual humidity of 1%, which even comprises polyvinyl alcohol as protective colloid and mineral caking agents; or (ii) the compound known with trade name VINNAPAS^{®} 5010 N (GER), that is a dispersible powder based on copolymer of vinylacetate and ethylene, further comprising a fine mineral filler as anti-blocking agent.

In a preferred embodiment of the invention, for the realization of the hydraulic binder compound, one uses at least a step of premixing (i) cement and optionally calcium hydroxide, with (iii) one or more auxiliary materials comprising at least one among: sand, pozzolana, silica, limestone, cellulose, silica fume, fine slag, corn starch, rice starch, potato starch, fibres, fluorine or phosphate salts, sodium chloride or combinations thereof, and with (ii) the polymeric re-dispersible powder based on vinyl acetate, vinyl versatate and ethylene, for example the re-dispersible powder known with trade name ELOTEX^{®} FX3300, or the like, wherein said re-dispersible powder is present in an amount comprised between 1 and 5% by weight, preferably equal to 1%, 1.4%, 1.5% or 2% by weight with respect to the total weight of the hydraulic binder compound.

For the preparation of the hydraulic binder compound according to the invention, the previously described re-dispersible polymer-based powders can be mixed with the other ingredients previously indicated in the suitable amounts by using conventional mixers. In case of using the commercial powder ELOTEX^{®} FX3300, it is preferable to keep the mixing time as short as possible. All anhydrous mixtures with re-dispersible polymer-based powder can be even easily mixed with water before application.

The pre-mixing of said one or more thermoplastic polymers with cement and with said one or more auxiliary materials advantageously allows to obtain a hydraulic binder compound capable of conferring significative elastic properties to the structural and/or infrastructural materials obtainable with the mixture according to any one of the embodiments of the invention. Surprisingly, the presence of said one or more polymers in the hydraulic binder compound, in particular copolymers based on vinyl acetate, vinyl versatate and ethylene, in the amounts indicated in the present description, allows to obtain structural and/or infrastructural material/products having significantly improved elastic properties as well as fatigue resistance with respect to the materials prepared with mixtures including conventional hydraulic binder, for example cement-based binder compounds which do not provide the addition of the above-mentioned polymers, or with respect to materials prepared with mixtures providing the addition of the above-mentioned polymers inside the bituminous emulsion.

Advantageously, the structural and/or infrastructural products, materials or elements which can be prepared by using any one of the mixtures according to the present invention have a better elastic behaviour within certain stress limits. Such elastic behaviour, in particular in case of structural foundations, guarantees an adequate response to the dynamic stresses (seismic actions), by preserving functionality and safety of the structure itself. Analogously, in case of road pavements, such elastic behaviour given by the mixture of the invention makes it superfluous to use expansion joints which otherwise would be required to face the deformations induced by temperature variations.

According to a preferred embodiment, the hydraulic binder compound used for the preparation of any mixture of the invention, also includes calcium hydroxide.

Said one or more auxiliary materials comprising at least one among sand, pozzolana, silica, limestone, cellulose, silica fume, fine slag, corn starch, rice starch, potato starch, fibres, fluorine or phosphate salts, sodium chloride, or combinations thereof, used for the preparation of a hydraulic binder compound according to the present invention, can be mixed with cement and optionally calcium hydroxide, during the previously mentioned pre-mixing step, before or after the addition of said one or more polymers.

According to a preferred embodiment of the invention, in said mixture, said hydraulic binder compound comprises sand and silica fume as auxiliary materials, preferably it comprises sand and pozzolana, still more preferably it comprises, added thereto, fine slag.

According to a preferred aspect of the invention, said hydraulic binder compound can further include one or more additive compounds selected among: super fluidifying, deaerating, anti-shrinkage, thickening compounds.

In a preferred embodiment according to the invention, said hydraulic binder compound according to any one of the previously described embodiments comprises a calcium sulfoaluminate-based anti-shrinkage agent, preferably it comprises an anti-shrinkage agent characterized by the combination of limestone, plaster and bauxite in adequate proportions, for example the anti-shrinkage agent available on the market with name DENKA CSA #20. The addition of an anti-shrinkage agent allows to minimize the formation of breaks caused by the shrinkage of the conglomerate during the drying step as well as to improve the water tightness thereof.

Thickening compounds suitable to be used for the realization of a hydraulic binder compound according to any one of the embodiments described in the present invention include methyl-hydroxyethyl-cellulose (MHEC)-based powders such as, for example, the cellulose-based powder commercially known as "Tylose^{®} MHS 30027 P6", a nonionic polymer deriving from cellulose, water soluble and highly etherified.

The use of additive materials may favour the development of chemical bonds during the mixing process, thus modulating the physical-chemical features of the resulting material which one wishes to obtain.

In an embodiment according to the invention, the hydraulic binder compound according to any one of the previously described embodiments includes even pozzolana, capable of increasing the resistance to water of the resulting structural or infrastructural material or product.

As already mentioned, the authors have found that the use of a hydraulic binder compound according to any one of the herein described embodiments for the preparation of a mixture according to the present invention, allows to obtain structural and/or infrastructural materials having an excellent fatigue resistance. Advantageously, by increasing or decreasing the amount of the hydraulic binder in the mixture according to any one of the herein described embodiments, yet always within the amounts, that is the concentration ranges shown in the present description and in claims, it is possible to modulate the physical-mechanical properties of the produced materials, by maintaining unaltered the excellent performances thereof in terms of fatigue and fracture resistance.

### Bituminous emulsion

Preferably, the bituminous emulsion used in any one of the mixtures according to the present description is a slow break cationic bituminous emulsion, preferably it is a cold bituminous emulsion. Under the term "break", in the context of the present description one refers to the term used to designate the moment in which the water present in the bituminous emulsion separates from the bitumen.

It is possible to classify the bituminous emulsions in different classes according to the characteristic breaking speed. Preferably, in a preferred embodiment of the invention, a slow break cationic bituminous emulsion of class 60 is used. At chromatic level it could be pigmented or of albino type.

The use of a cold bituminous emulsion in the mixture of the invention eases the formation of elastic bridges during the process for manufacturing structural and/or infrastructural materials or elements. The use of cold bituminous conglomerates is always a valid alternative to the traditional cold conglomerates since it does not involve particular difficulties in the construction phase but at the same time it offers considerable environmental advantages.

In an embodiment, the bituminous emulsion used in any one of the mixtures according to the present invention, comprises an amount of water in a quantity by weight, evaluated with respect to the total weight of the bituminous emulsion, comprised between 40% and 60%, preferably equal to 50%.

### Embodiments of the mixture

According to an aspect of the invention, the mixture according to any one of the herein disclosed embodiments, it can even include one or more complementary substances selected among retardant, accelerator, super fluidifying, deaerating, thickening, anti-shrinkage, anti-segregating and water reducing substances. Not limiting examples of the above-mentioned substances or compounds include sodium gluconate (as retardant), aluminous cements (as accelerator), cellulose ether (as anti-segregating substance), melanin-based polycondensates, sulphonate compounds (as water reducers), a liquid product containing organic substances (as anti-shrinkage substance).

By varying the amounts of the components present in any one of the herein described mixtures within the concentration ranges shown in the present description and in claims, it is possible to obtain more or less elastic, deformable, and more or less stiff products, by releasing the elasticity features from the stiffness ones. Within the value ranges reported in the present description and in claims, in fact, the bituminous emulsion, the hydraulic binder compound and the inert granular materials cooperate synergically so as to allow an increase in stiffness of the obtained structural and/or infrastructural product by preserving the elasticity thereof.

The exact amount of the hydraulic binder compound, bituminous emulsion and inert granular materials can be modified within the concentration ranges shown in the present description and claims depending upon the type of product which one wants to implement. Such amounts in fact affect the degree of stiffness or elasticity to be conferred to the final product, as well as the type of workability to be performed to implement the product.

According to an additional aspect, in a mixture according to any one of the herein described embodiments:
- said one or more inert granular materials are present in a quantity by weight, determined with respect to the total weight of the mixture, comprised between 45 and 67% or between 45 and 60%;
   - said hydraulic binder compound is present in a quantity by weight, determined with respect to the total weight of the mixture, comprised between 23 and 44% or between 28 and 44%; and
   - said bituminous emulsion in a quantity by weight, determined with respect to the total weight of the mixture, comprised between 4 and 12%.

In a preferred embodiment, said mixture is selected among (a) a mixture comprising:
- one or more inert granular materials in a quantity by weight, determined with respect to the total weight of the mixture, comprised between approximately 65.6-66.67% by weight;
- a hydraulic binder compound in a quantity by weight, determined with respect to the total weight of the mixture, comprised between approximately 28.12 and 28.57% by weight;
- a slow break cationic bituminous emulsion in a quantity by weight, determined with respect to the total weight of the mixture, comprised between approximately 4.76% and 6.28%;

wherein said hydraulic binder compound comprises cement in an amount equal to approximately 52% by weight, a copolymer based on vinyl acetate, ethylene, vinyl versatate in an amount equal to approximately 2% by weight and one or more auxiliary materials comprising sand and silica fume in an amount comprised between 40 and 45% by weight, with respect to the total weight of said hydraulic binder compound;
(b) a mixture comprising:
   - one or more inert granular materials in a quantity by weight, determined with respect to the total weight of the mixture, comprised between approximately 62.5 and 66.04% by weight;
   - a hydraulic binder compound in a quantity by weight, determined with respect to the total weight of the mixture, comprised between approximately 26.79 and 28.3% by weight;
   - a slow break cationic bituminous emulsion in a quantity by weight, determined with respect to the total weight of the mixture, comprised between approximately 5.66 and 10.71%;
wherein said hydraulic binder compound comprises cement in an amount equal to approximately 5% by weight, calcium hydroxide, a copolymer based on vinyl acetate, ethylene, vinyl versatate in an amount comprised between 1-2% by weight, preferably equal to 1% or 2% by weight, and one or more auxiliary materials comprising sand, pozzolana and fine slag in an amount comprised between 50 and 90% by weight, with respect to the total weight of said hydraulic binder compound; and
(c) a mixture comprising:
   - one or more inert granular materials in a quantity by weight, determined with respect to the total weight of the mixture, comprised between approximately 45 and 67% by weight, preferably equal to 56%;
   - a hydraulic binder compound in a quantity by weight, determined with respect to the total weight of the mixture, comprised between approximately 28 and 44% by weight, preferably equal to 36%;
   - a slow break cationic bituminous emulsion in a quantity by weight, determined with respect to the total weight of the mixture, comprised between approximately 4 and 12%, preferably equal to 8%;
wherein said hydraulic binder compound comprises cement in an amount between 5 and 25% by weight, calcium hydroxide, a copolymer based on vinyl acetate, ethylene, vinyl versatate in an amount equal to 1.5% by weight and one or more auxiliary materials comprising sand, pozzolana and fine slag in an amount comprised between 50 and 90% by weight, with respect to the total weight of said hydraulic binder compound.

As illustrated in the experimental section, the materials prepared by using any one of the mixtures a)-c) according to the present invention result to be surprisingly improved (that is they show a high elastic modulus and an extraordinary higher fatigue resistance) with respect to materials which do not provide the addition of thermoplastic polymers to the hydraulic binder compound, or which consist of the hydraulic binder (ii) or base (iii) only.

According to an embodiment, the present invention relates to a mixture for the realization of structural and/or infrastructural products according to the quali-quantitative composition shown in Table 1.

**Table 1: Composition of the mixture of the invention according to an embodiment, also denominated "Step IV-1".**

| Sample | **Hydraulic binder compound** | Inert granular materials | Slow break cationic bituminous emulsion (ECL60) with 50% water/bitumen content | | Total |
|---|---|---|---|---|---|
| **Step IV-1** | 28.57% | 66.67% | 4.76% | | 100% |

| **Composition of the hydraulic binder compound** | | | | | |
|---|---|---|---|---|---|
| Component | | | | % by weight | |
| Cement 42.5 | | | | 52 | |
| Sand 0.1-0.5 mm | | | | 41.2 | |
| Silica fume | | | | 3.22 | |
| Denka CSA 20 - anti shrinkage | | | | 1.65 | |
| Super-plasticising agents | | | | 0.8 | |
| Deaerating agents | | | | 0.094 | |
| Thickener - cellulose tylose 30027 P6 | | | | 0.036 | |
| **Polymers based on ethylene and vinyl acetate-Elotex FX3300** | | | | **1** | |
| TOTAL | | | | 100 | |

| **Composition of the inert granular materials** | | | | | |
|---|---|---|---|---|---|
| Fine aggregate: crushed sand 0/4 | | | | 33.33% | |
| Coarse aggregate: crushed ballast 4/8 | | | | 13.33% | |
| Coarse aggregate: crushed ballast 10/16 | | | | 20.0% | |
| **TOTAL** | | | | 66.67% | |

According to an embodiment, the present invention relates to a mixture for the realization of structural and/or infrastructural products according to the quali-quantitative composition shown in Table 2.

**Table 2: Composition of the mixture of the invention according to an embodiment also denominated "Step IV-2".**

| Sample | **Hydraulic binder compound** | Inert granular materials | Slow break cationic bituminous emulsion (ECL60) with 50% water/bitumen content | | Total |
|---|---|---|---|---|---|
| **Step IV-2** | 28.12% | 65.6% | 6.28% | | 100% |

| **Composition of the hydraulic binder compound** | | | | | |
|---|---|---|---|---|---|
| Component | | | | % by weight | |
| Cement 42.5 | | | | 52 | |
| Sand 0.1-0.5 mm | | | | 41.2 | |
| Silica fume | | | | 3.22 | |
| Denka CSA 20 - anti shrinkage | | | | 1.65 | |
| Super-plasticising agents | | | | 0.8 | |
| Deaerating agents | | | | 0.094 | |
| Thickener - cellulose tylose 30027 P6 | | | | 0.036 | |
| **Polymers based on ethylene and vinyl acetate - Elotex FX3300** | | | | **1** | |
| **TOTAL** | | | | 100 | |

| **Composition of the inert granular materials** | | | | | |
|---|---|---|---|---|---|
| Fine aggregate: crushed sand 0/4 | | | | 32.80% | |
| Coarse aggregate: crushed ballast 4/8 | | | | 13.12% | |
| Coarse aggregate: crushed ballast 10/16 | | | | 19.68% | |
| **TOTAL** | | | | 65.6% | |

According to an embodiment, the present invention relates to a mixture for the realization of structural and/or infrastructural products according to the quali-quantitative composition shown in Table 3.

**Table 3: Composition of the mixture of the invention according to an embodiment, also denominated "Step IVb-1".**

| Sample | **Hydraulic binder compound** | Inert granular materials | Slow break cationic bituminous emulsion (ECL60) with 50% water/bitumen content | Total |
|---|---|---|---|---|
| **Step IVb-1** | 28.57% | 66.67% | 4.76% | 100% |

| **Composition of the hydraulic binder compound** | | | | |
|---|---|---|---|---|
| Component | | | | % by weight |
| Cement 42.5 | | | | 52 |
| Sand 0.1-0.5 mm | | | | 40.2 |
| Silica fume | | | | 3.22 |
| Denka CSA 20 - anti shrinkage | | | | 1.65 |
| Super-plasticising agents | | | | 0.8 |
| Deaerating agents | | | | 0.094 |
| Thickener - cellulose tylose 30027 P6 | | | | 0.036 |
| **Polymers based on ethylene and vinyl acetate-Elotex FX3300** | | | | **2** |
| **TOTAL** | | | | 100 |

| **Composition of the inert granular materials** | | | | |
|---|---|---|---|---|
| Fine aggregate: crushed sand 0/4 | | | | 33.33% |
| Coarse aggregate: crushed ballast 4/8 | | | | 13.33% |
| Coarse aggregate: crushed ballast 10/16 | | | | 20.0% |
| **TOTAL** | | | | 66.67% |

According to an embodiment, the present invention relates to a mixture for the realization of structural and/or infrastructural products according to the quali-quantitative composition shown in Table 4.

**Table 4: Composition of the mixture of the invention according to an embodiment, also denominated "Step IVb-2".**

| Sample | **Hydraulic binder compound** | Inert granular materials | Slow break cationic bituminous emulsion (ECL60) with 50% water/bitumen content | Total |
|---|---|---|---|---|
| **Step IVb-2** | 28.12% | 65.6% | 6.28% | 100% |

| **Composition of the hydraulic binder compound** | | | | |
|---|---|---|---|---|
| Component | | | | % by weight |
| Cement 42.5 | | | | 52 |
| Sand 0.1-0.5 mm | | | | 40.2 |
| Silica fume | | | | 3.22 |
| Denka CSA 20 - anti shrinkage | | | | 1.65 |
| Super-plasticising agents | | | | 0.8 |
| Deaerating agents | | | | 0.094 |
| Thickener - cellulose tylose 30027 P6 | | | | 0.036 |
| **Polymers based on ethylene and vinyl acetate - Elotex FX3300** | | | | **2** |
| **TOTAL** | | | | 100 |

| **Composition of the inert granular materials** | | | | |
|---|---|---|---|---|
| Fine aggregate: crushed sand 0/4 | | | | 32.8% |
| Coarse aggregate: crushed ballast 4/8 | | | | 13.12% |
| Coarse aggregate: crushed ballast 10/16 | | | | 19.68% |
| **TOTAL** | | | | 65.6% |

According to an embodiment, the present invention relates to a mixture for the realization of structural and/or infrastructural products according to the quali-quantitative composition shown in Table 5.

**Table 5: Composition of the mixture of the invention according to an embodiment, also denominated "Damp Earth" Step.**

| Sample | **Hydraulic binder compound** | Inert granular materials | Slow break cationic bituminous emulsion (ECL60) with 50% water/bitumen content | Total |
|---|---|---|---|---|
| **Damp earth** | 23.8% | 71.43% | 4.77% | 100% |

| **Composition of the hydraulic binder compound** | | | | |
|---|---|---|---|---|
| Component | | | | % by weight |
| Cement 42.5 | | | | 57.2 |
| Sand 0.1-0.5 mm | | | | 18.8 |
| Silica fume | | | | 3.22 |
| Denka CSA 20 - anti-shrinkage | | | | 1 |
| Carbonate | | | | 18.8 |
| Thickener - cellulose tylose 30027 P6 | | | | 0.9 |
| **Polymers based on ethylene and vinyl acetate - Elotex FX3300** | | | | **1.4** |
| **TOTAL** | | | | 100 |

According to an embodiment, the present invention relates to a mixture for the realization of structural and/or infrastructural products according to the quali-quantitative composition shown in Table 6. As inert granular materials the same materials specified in Tables 1-4 can be used.

**Table 6: Composition of the mixture of the invention according to an embodiment, also denominated "Eco-FlowMix".**

| Sample | **Hydraulic binder compound** | Inert granular materials | Slow break cationic bituminous emulsion (ECL60) with 40% water/bitumen content | **Total** |
|---|---|---|---|---|
| **Eco-FlowMix** | 26.79 - 28.3% | 62.5-66.04% | 5.66-10.71% | 100% |

| **Composition of the hydraulic binder compound** | | | | |
|---|---|---|---|---|
| Component | | | | % by weight |
| Cement 52.5 | | | | 5 |
| Calcium hydroxide | | | | 5 |
| Sand 0.1-0.5 mm | | | | 51.5 |
| Fine slag | | | | 15 |
| Denka CSA 20 - anti-shrinkage | | | | 0.5 |
| Pozzolana | | | | 20 |
| Super-plasticising | | | | 0.9 |
| Deaerating | | | | 0.1 |
| Thickener - cellulose tylose 30027 P6 | | | | 0.005 |
| Sodium chloride | | | | 0.004 |
| **Polymers based on ethylene and vinyl acetate - Elotex FX3300** | | | | **2** |
| TOTAL | | | | 100 |

Advantageously, the hydraulic binder compound of the mixture herein denominated as "Eco-FlowMix" preferably includes Roman cement, so as to guarantee high performances over time. The amount of cement present in the hydraulic binder compound of the mixture herein denominated "Eco-FlowMix" is equal to 5% by weight with respect to the total weight of the hydraulic binder compound, then a lower amount than the amount of cement present in the hydraulic binder compound of the mixtures having the composition shown in the preceding tables 1-5.

Advantageously, this mixture preferably comprises eco-friendly materials such as recycled inert materials and/or recovery slags in combination with recovery Roman cement, thereto the polymers capable of conferring greater elasticity to the resulting hydraulic binder compound are added.

The authors of the present invention have found, as clearly illustrated in the experimental section (example 2), that the mixture having the composition shown in table 6 results to be particularly suitable for the realization of a millimetre anti-wear layer, capable of adapting to the continuous variations of the underlying layers, since considerably elastic.

According to an embodiment, the present invention relates to a mixture for the realization of structural and/or infrastructural products according to the quali-quantitative composition shown in Table 6a. As inert granular materials the same materials specified in Tables 1-4 can be used.

**Table 6a: Composition of the mixture of the invention according to an additional embodiment, also denominated " ECO-FLOWMIX".**

| Sample | **Hydraulic binder compound** | Inert granular materials | Slow break cationic bituminous emulsion (ECL60) with 40% water/60% bitumen content | Total |
|---|---|---|---|---|
| **Eco-FlowMix** | 28-44% (36%) | 45-60% (56%) | 4-12% (8%) | 100% (100%) |

| **Composition of the hydraulic binder compound** | | | | |
|---|---|---|---|---|
| Component | | | | % by weight |
| Calcium hydroxide | | | | 6 |
| Pozzolana | | | | 10 |
| Fine slag | | | | 12 |
| Cement 52.5 | | | | 12 |
| Silica fume (for example ELKEM 920D) | | | | 0.5 |
| Carbonate 2.8 mm | | | | 7 |
| Carbonate 0.9 mm | | | | 7.5 |
| Carbonate 0.6 mm | | | | 4.5 |
| Carbonate 0.3 mm | | | | 7.5 |
| Sand 0.1-0.5 mm | | | | 28 |
| Superfluidifying additive (for example DEHSCOFIX 158) | | | | 1.1 |
| Anti-shrinkage additive (for example DENKA CSA 20) | | | | 0.9 |
| Fluidifying additive (for example MELMENT F10) | 0.5 | | | |
| Deaerating additive (for example SITREN AIRVOID 360) | 0.4 | | | |
| Accelerator additive (for example CALCIUM FORMATE) | 0.1 | | | |
| Sodium chloride | 0.33 | | | |
| Rice starch/Potato starch | 0.15 | | | |
| Cellulose (for example CULMINAL C3852) | 0.02 | | | |
| Polymers based on ethylene and vinyl acetate - (for example ELOTEX FX3300) | 1.5 | | | |
| **TOTAL** | 100 | | | |

Advantageously, even this mixture preferably comprises eco-friendly materials such as recycled inert materials and/or recovery slags in combination with recovery Roman cement, thereto the polymers capable of conferring greater elasticity to the resulting hydraulic binder compound are added.

In particular:
- lime and pozzolana guarantee durability over time through a constant "slow" curing reaction;
- the cement and the blast furnace slags, mixed with some minerals thereamong silica fume, alumina powder and sodium chloride, catalyze, fill-in the capillary porosities and crystallize, by mainly developing the hydration of the silicates and then by favouring the bonds according to a reaction of "fast" type;
- the carbonates in granulometric curve provide elasticity, useful to the final application;
- the sand allows cohesion, it favours the system compactness and increases the mechanical and abrasion resistances.

In particular, the authors of the present invention have found that the presence in the mixtures according to any one of the previously described variants of a small, but significative, percentage of sodium chloride (in concentration almost equal to the one which can be found in the sea water) allows of:
- accelerating the catalyzing processes among the various compounds present in the mixture;
- allowing to control *"pop-out"* phenomena, that is reactions of alkali and aggregates so as to induce micro-explosions; in fact, the voluntary insertion of salts blocks possible other salts, however the bituminous emulsion coating the mixtures, such as the mixture "ECO-FLOWMIX", guarantees already waterproofing;
- making the final product white or however very pale, for reasons of aesthetic value and environmental sustainability.

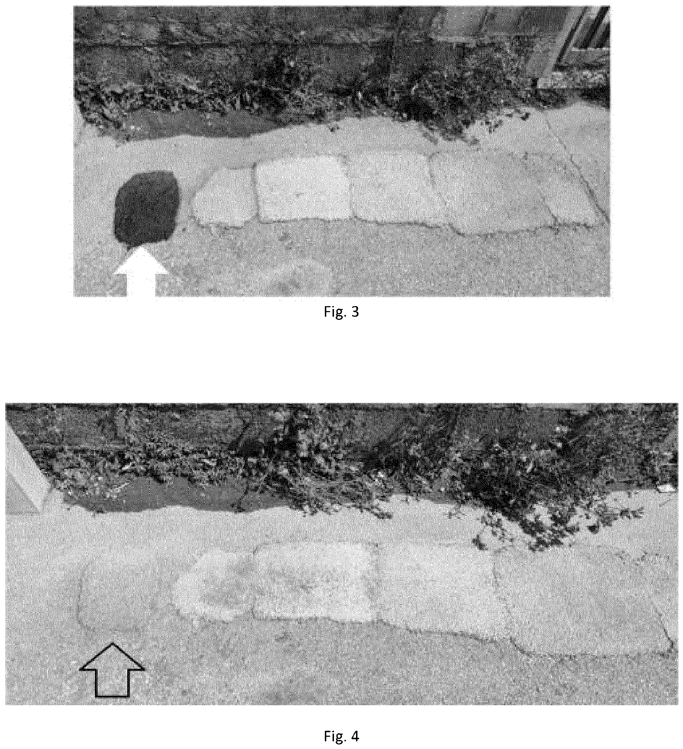

As illustrated by pure way of example in Figures 3 and 4, it is possible to observe that the product obtained by using the mixture "ECO-FLOWMIX" with 10% water, is at first dark and instead it becomes pale on the same day or the day after the rain.

The present invention also relates to the use of a mixture according to any one of the previously described embodiments for the realization of structural and/or infrastructural products, which use comprises the combination of said mixture with an aqueous solvent so as to obtain a substantially homogeneous mixture mouldable for the realization of said products.

Preferably, said aqueous solvent is water.

According to an aspect of the invention, for the preparation of said structural and/or infrastructural products, the required amount of aqueous solvent is inserted in a suitable container in which then the invention mixture is introduced under adequate stirring. A too intense stirring of the mixture can have as consequence a not wished strong air incorporation.

In an embodiment of the invention, said aqueous solvent, preferably water, is added to the mixture of the invention in an amount comprised between 5 and 12% with respect to the total weight of the mixture, preferably in an amount comprised between 5 and 8% with respect to the total weight of the mixture, preferably equal to approximately 5% or approximately 10%, or still in an amount between 6.5% and 8% with respect to the total weight of the mixture. The so obtained conglomerate then can be used to implement the wished product.

According to an embodiment of the present invention, the total content of mixing water of the mixture to be used is calculated to the extent of approximately 21% on the weight of the hydraulic binder compound. According to an embodiment, the total content of mixing water of the mixture to be used, excluding or including the one present in the bituminous emulsion, is as shown in tables 16A-C, 17 A-C, 18 A-C, 19 A-C or 37.

According to a preferred embodiment, the total content of mixing water of the mixture to be used, excluding or including the one present in the bituminous emulsion, is equal to 10%.

The present invention also relates to a process for the production of a mixture for the realization of structural and/or infrastructural products, comprising at least the following steps of:
a. preparing a hydraulic binder compound by mixing (i) cement and optionally calcium hydroxide in a quantity by weight, determined with respect to the total weight of said hydraulic binder compound, comprised between 4 and 60%; with (ii) one or more thermoplastic polymers in a quantity by weight, determined with respect to the total weight of said hydraulic binder compound, comprised between 1% and 5%, and (iii) with one or more auxiliary materials comprising at least one among: sand, pozzolana, silica, limestone, cellulose, silica fume, fine slag, corn starch, rice starch, potato starch, fibres, fluorine or phosphate salts, sodium chloride or combinations thereof, in a quantity by weight, determined with respect to the total weight of said hydraulic binder compound, comprised between 40 and 95%; and
b. mixing the hydraulic binder compound obtained in step a. with one or more inert granular materials and with a bituminous emulsion so as to obtain said mixture; said hydraulic binder compound being in a quantity by weight, determined with respect to the total weight of the mixture, comprised between 20 and 45%, preferably comprised between 23 and 29% or between 30 and 40%, said one or more inert granular materials being in a quantity by weight, determined with respect to the total weight of the mixture, comprised between 45 and 80% or between 45 and 70%, preferably comprised between 60 and 75% or between 48 and 66%, still more preferably comprised between 62 and 68% or between 50 and 62%, and said bituminous emulsion being in a quantity by weight, determined with respect to the total weight of the mixture, comprised between 2 and 14%, preferably comprised between 4 and 13%, still more preferably comprised between 5 and 11%; and
wherein said one or more thermoplastic polymers are homopolymers or copolymers formed by monomers selected in the group comprising vinyl acetate, ethylene, vinyl versatate, styrene, butadiene, and/or mixtures thereof, preferably wherein said one or more polymers are copolymers of ethylene and vinyl acetate or copolymers of ethylene, vinyl acetate and vinyl versatate.

Preferably, in step b. of the process according to any one of the herein described embodiments, said hydraulic binder compound is in a quantity by weight, determined with respect to the total weight of the mixture, comprised between 23 and 44% or between 28 and 44%, and said one or more inert granular materials are in a quantity by weight, determined with respect to the total weight of the mixture, comprised between 45 and 67% or between 45 and 60% and said bituminous emulsion is in a quantity by weight, determined with respect to the total weight of the mixture, comprised between 4 and 12%.

The herein described process can include the use of inert granular materials, bituminous emulsion, as well as cements, thermoplastic materials and auxiliary materials according to any one of the quantities and the embodiments disclosed in the present description and in claims.

The amount of the inert granular materials, bituminous emulsion, as well as cements, thermoplastic polymers and auxiliary materials usable in the herein described process could vary within the quantities, that is the concentration intervals, as previously shown in the present description.

According to an aspect of the present invention, said process could further comprise a step a. previous to step b., wherein said bituminous emulsion is modified so as to obtain a cold bituminous emulsion. Preferably, said bituminous mixture is modified with a thermoplastic polymer such as a styrene-butadiene-styrene copolymer.

According to an additional aspect of the invention, said step b. is performed by using a mechanical mixer, preferably for a duration equal to 5 minutes, at a temperature equal to 20 ± 2°C. In an embodiment of the invention, said step b. is performed by using an aqueous solvent, preferably water, which is added to the mixture of the invention preferably in an amount comprised between 5 and 12% with respect to the total weight of the mixture, preferably between 5 and 8% with respect to the total weight of the mixture, preferably equal to 5% or to 10% by weight, or still in an amount between 6.5% and 8% with respect to the total weight of the mixture.

According to an embodiment of the present invention, the total content of mixing water of the mixture to be added in step b. is calculated to the extent of approximately 21% on the weight of the hydraulic binder compound.

According to an embodiment, the total content of mixing water of the mixture to be added in step b, excluding or including the one present in the bituminous emulsion, is as shown in tables 16A-C, 17 A-C, 18 A-C, 19 A-C or 37.

According to a preferred embodiment, the total content of mixing water of the mixture to be added in step b, excluding or including the one present in the bituminous emulsion, is equal to 10%.

The herein described process can further include a step providing the addition to said mixture of one or more complementary substances selected among retardant, accelerator, super fluidifying, deaerating, thickening, anti-shrinkage, anti-segregating and water reducing substances. The addition of one or more of these complementary substances can take place during step a. or b. or can be performed in an independent step, before or after said step b or, still, can be performed during both steps a. and b.

It is preferable that the mixture obtained by means of a process according to any one of the previously described embodiments is left to rest for a short period of time before being applied for the realization of said structural and/or infrastructural products.

The invention also relates to a mixture for the realization of structural and/or infrastructural products obtainable by means of any one of the previously described processes.

The invention further relates to a process for the production of structural and/or infrastructural products characterized by the use of a mixture according to any one of the herein described embodiments.

According to an aspect of the invention, said process provides at least a step of mixing any one of the herein described mixtures of the invention with an aqueous solvent, preferably water, so as to obtain a substantially homogeneous mixture mouldable for the realization of said products.

According to an aspect of the invention, in said process, the amount of aqueous solvent required to implement the wished product is inserted in a suitable container in which then the mixture of the invention is inserted under adequate stirring. In an embodiment of the invention, said aqueous solvent, preferably water, is added to the mixture of the invention in an amount comprised between 5 and 12% with respect to the total weight of the mixture, preferably between 5 and 8% with respect to the total weight of the mixture, preferably equal to approximately 5%, or still in an amount between 6.5% and 8% with respect to the total weight of the mixture.

According to a preferred embodiment of the present invention, in said process, the total content of mixing water of the mixture to be used, is calculated to the extent of approximately 21% on the weight of the hydraulic binder compound.

According to a preferred embodiment, in said process, the total content of mixing water of the mixture to be added in step b, excluding or including the one present in bituminous emulsion, is as shown in tables 16A-C, 17 A-C, 18 A-C, 19 A-C or 37.

An embodiment of the present invention relates to a process for the production of a structural and/or infrastructural product comprising the following steps:
a. mixing any one of the previously described mixtures with an aqueous solvent, preferably water;
b. depositing, applying and/or modelling the mixture obtained in step a. so as to obtain said structural and/or infrastructural product.

The amount of aqueous solvent, preferably water, usable in step a. of the above-described process could vary depending upon the type of product which one wishes to implement, for example it could vary in a range as previously shown in the present description. Depending upon the type of structural and/or infrastructural product to be implemented, a person skilled in the art will be able to evaluate the required amount of aqueous solvent which should be added to any one of the mixtures according to the present invention.

The mixture obtained at the end of step a. of the process according to the invention will be mouldable, that is it will have a low resistance to deformability, and it will have a behaviour similar to that of a viscous fluid. Therefore, the mixture obtained with step a. could be modelled so as to obtain the structural and/or infrastructural product having the wished shape and sizes.

According to an aspect of the invention, the mixture obtained in step a. is left to rest for a short period of time before proceeding to implement the wished product. Depending upon the type of structural and/or infrastructural product which one wishes to obtain, the mixture obtained in step a. of the above-described process could be inserted inside a suitable container or, alternatively, deposited on a determined surface and then left to be cured to obtain the above-mentioned product.

In case of production of levels or screeds, the mixture could also be distributed on the involved surface as with procedures similar to those commonly used with traditional products.

During step b. of the process according to any one of the herein described embodiments, the mixture obtained at point a. is subjected to a curing process, also known in English as *"curing process",* that is a process in which the different chemical reactions between the different components of the mixture, and which determines the development of the mechanical resistance property of the same. During this process the hydraulic binder compound present in the mixture undergoes a hydration process which determines the progressive curing of the cement base.

The aqueous solvent contributing to the process of curing the mixture of the invention comprises the solvent added during step a. of the previously described process but even the water present in the bituminous emulsion used for the preparation of the mixture of the invention. The water present in the emulsion facilitates the distribution of the bitumen filaments inside the mixture of the invention, by creating elastic bridges between the granular inert materials which are mixed, covered, by the hydraulic binder compound. In this way, during the process of curing the mixture, a reticular structure is formed, formed by the bitumen which is capable of conferring elasticity to the mixture once it has cured.

The total water content present in the mixture according to the invention could be calculated based upon the sum of the water content already present in the bituminous emulsion inside the mixture and the content of water added to the mixture itself.

The result is a synergic union of the two binders used for the preparation of the mixture, that is the hydraulic binder compound (containing thermoplastic polymers) and the bituminous emulsion, a combination allowing to overcome the disadvantages linked to the use of the two binders singularly.

Preferably, in an embodiment of the invention, the mixture according to any one of the previously described embodiments used for the realization of said structural and/or infrastructural product includes a cold bituminous emulsion. In this way, it is avoided to reach too high temperatures which would determine the breaking of the chemical bonds allowing to reach a synergic combination between the two binders (that is hydraulic binder and bituminous emulsion). This allows to process the mixture at room temperature, that is at much more reduced temperatures with respect to those typically used for the realization of hot asphalts, for example approximately 150°C.

Examples are shown hereinafter, aimed at illustrating better some embodiments of the present invention; said examples are not to be considered in any way as limiting the previous description and the following claims.

### Examples

The mechanical properties of products obtained by using the mixtures shown in the following tables were tested both in laboratory and in the field. The above-mentioned mixtures were prepared by mixing different ingredients according to the process described in the present application, by using water as solvent in the amounts shown in the following tables.

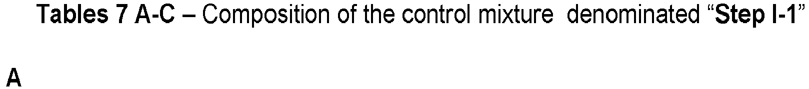

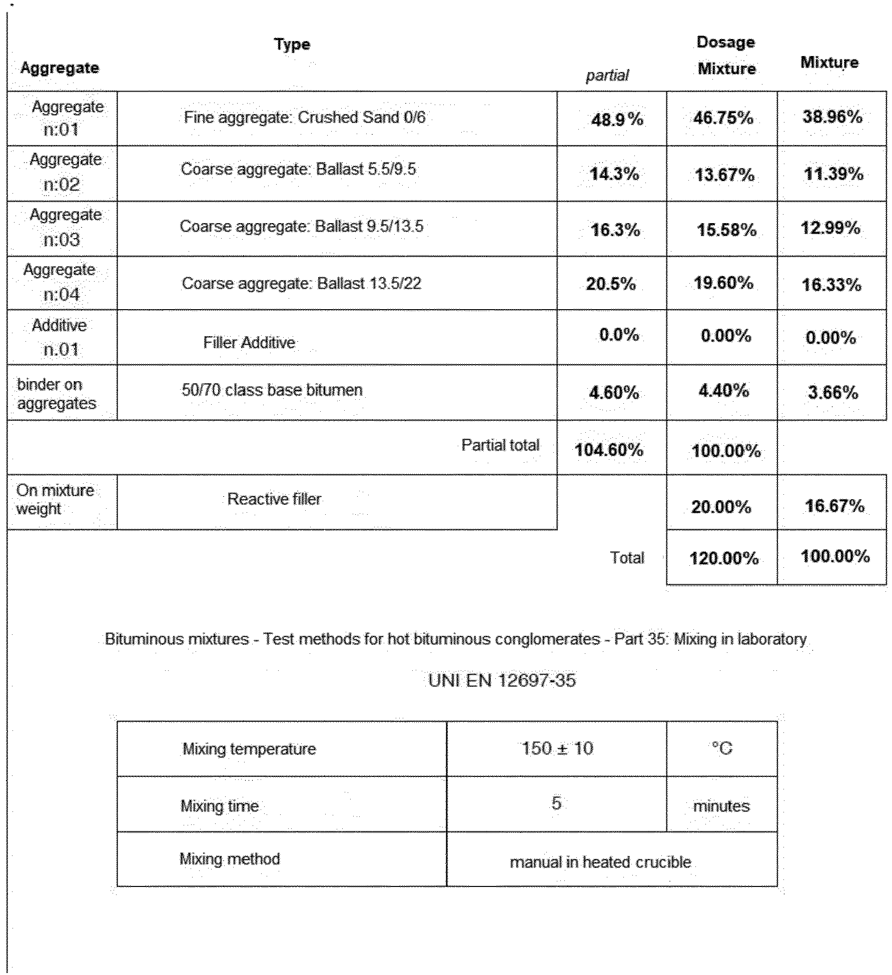

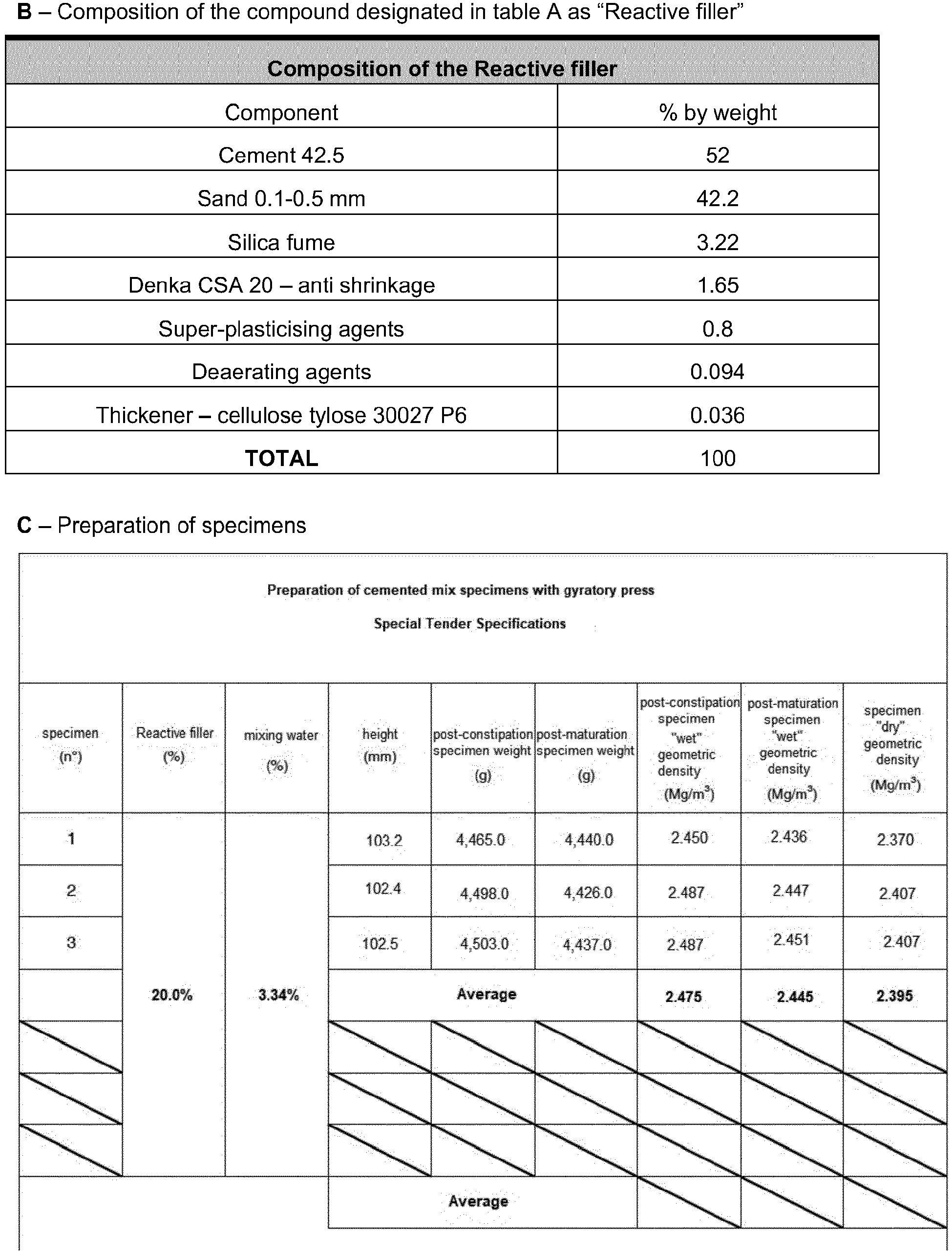

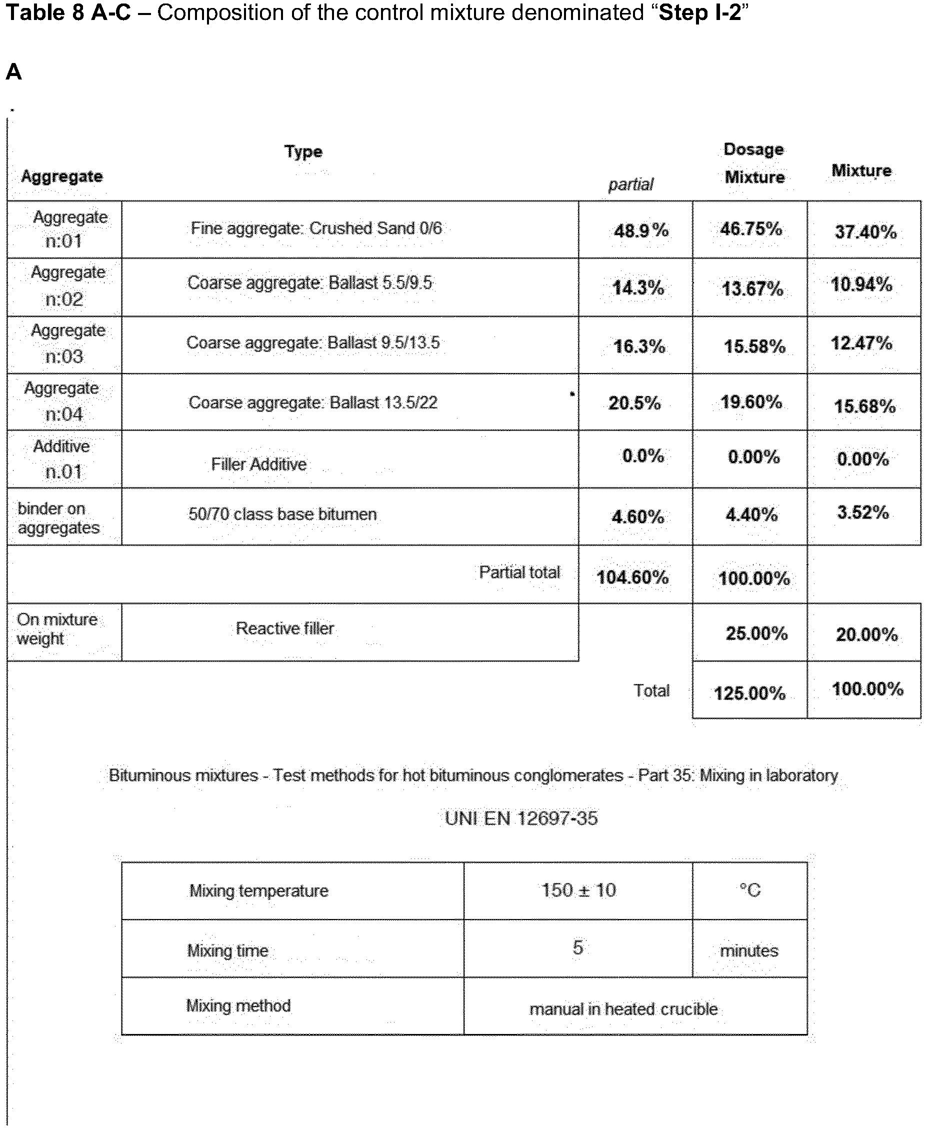

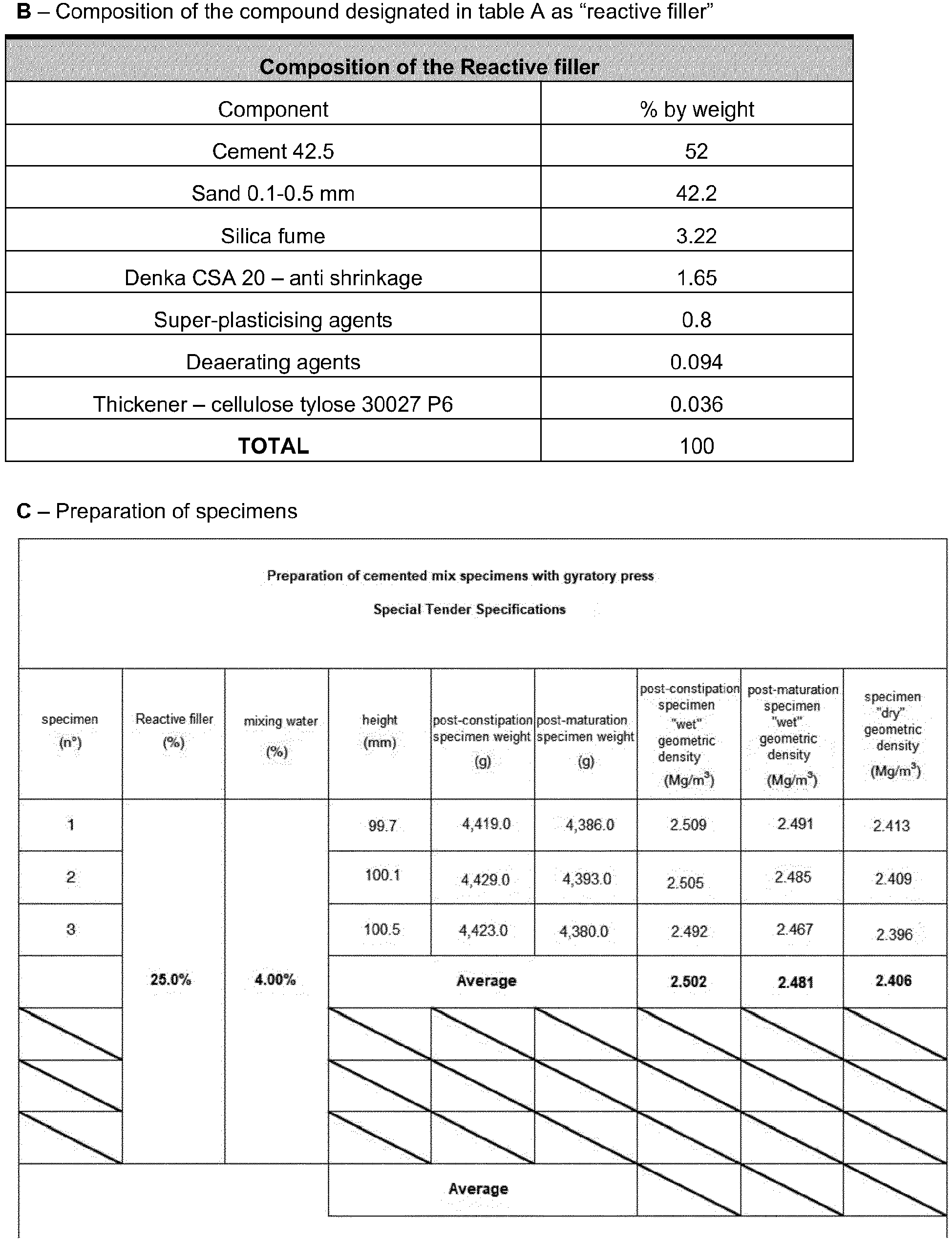

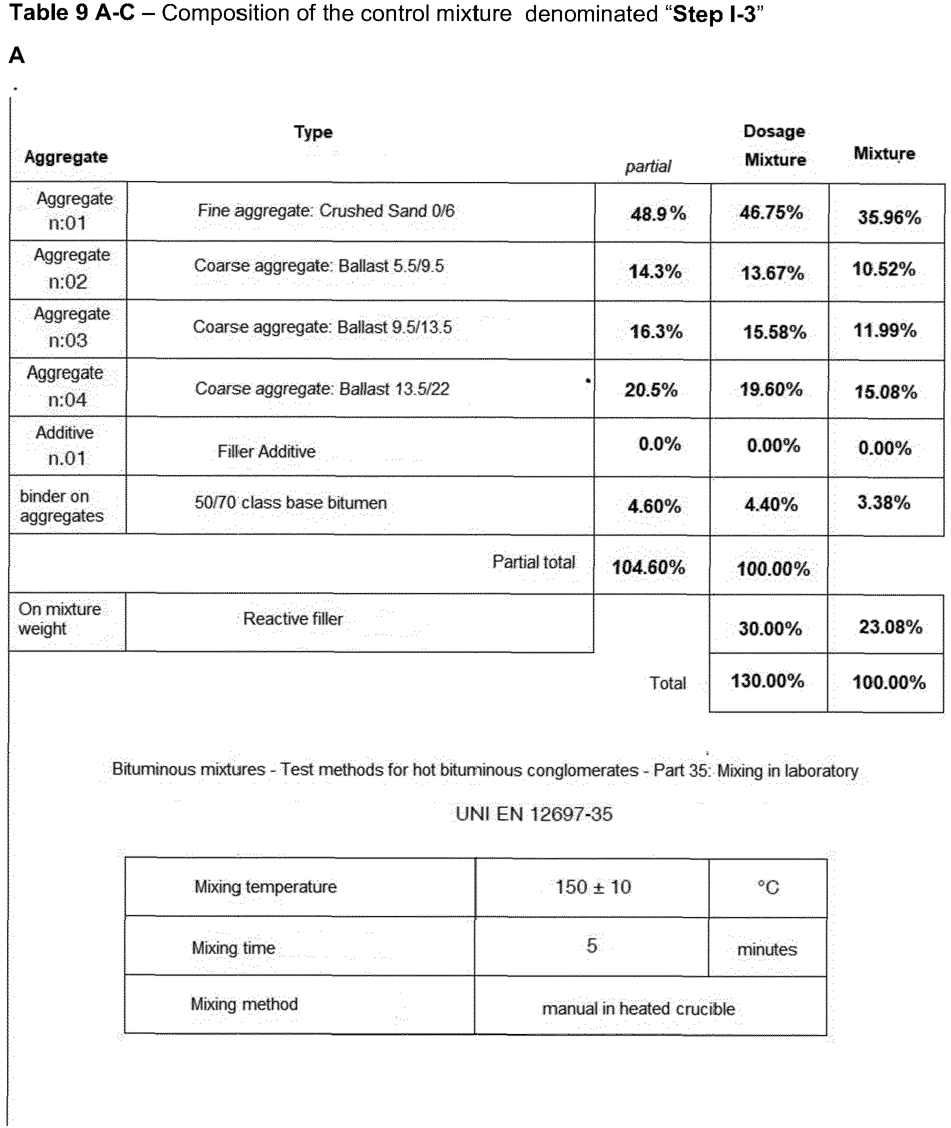

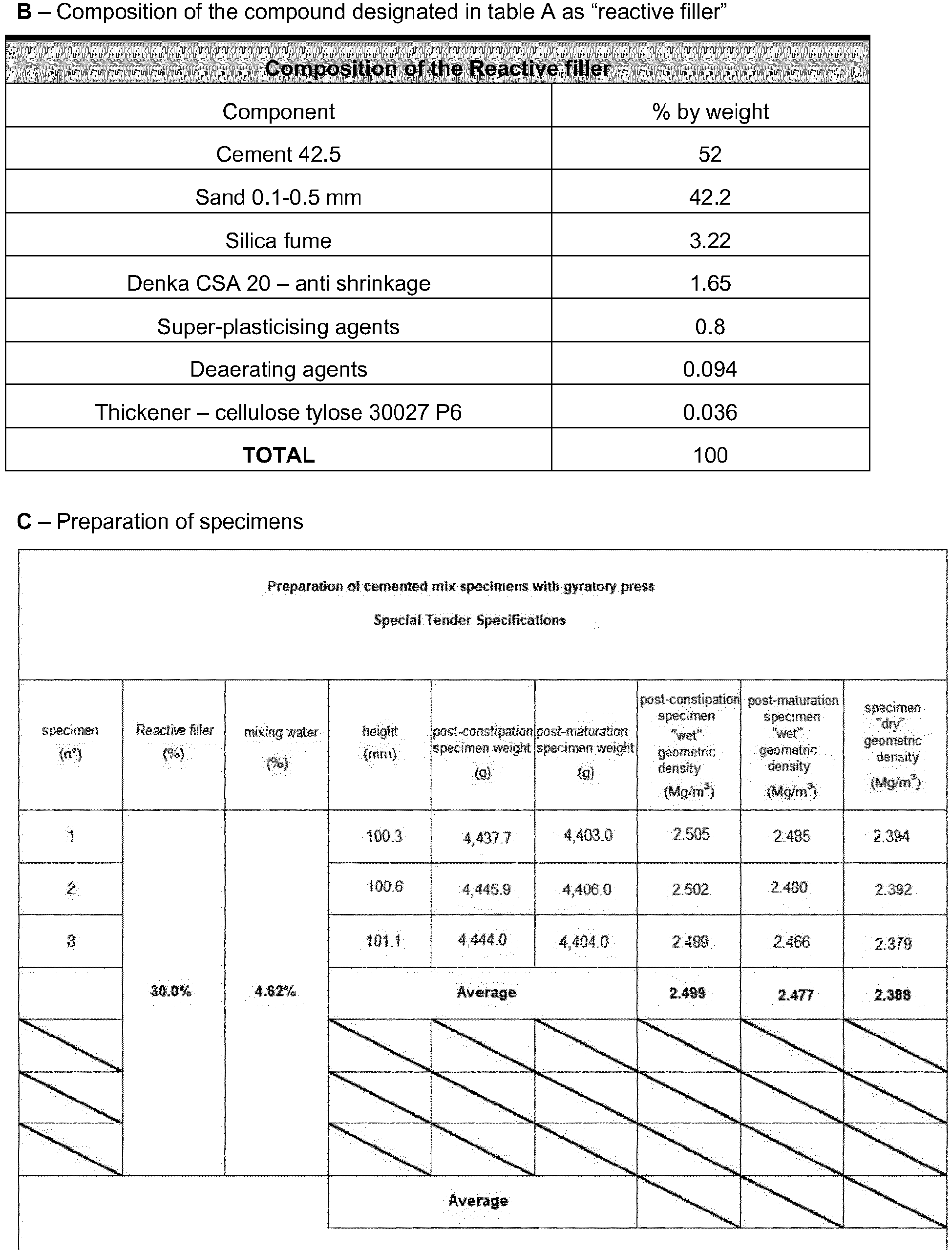

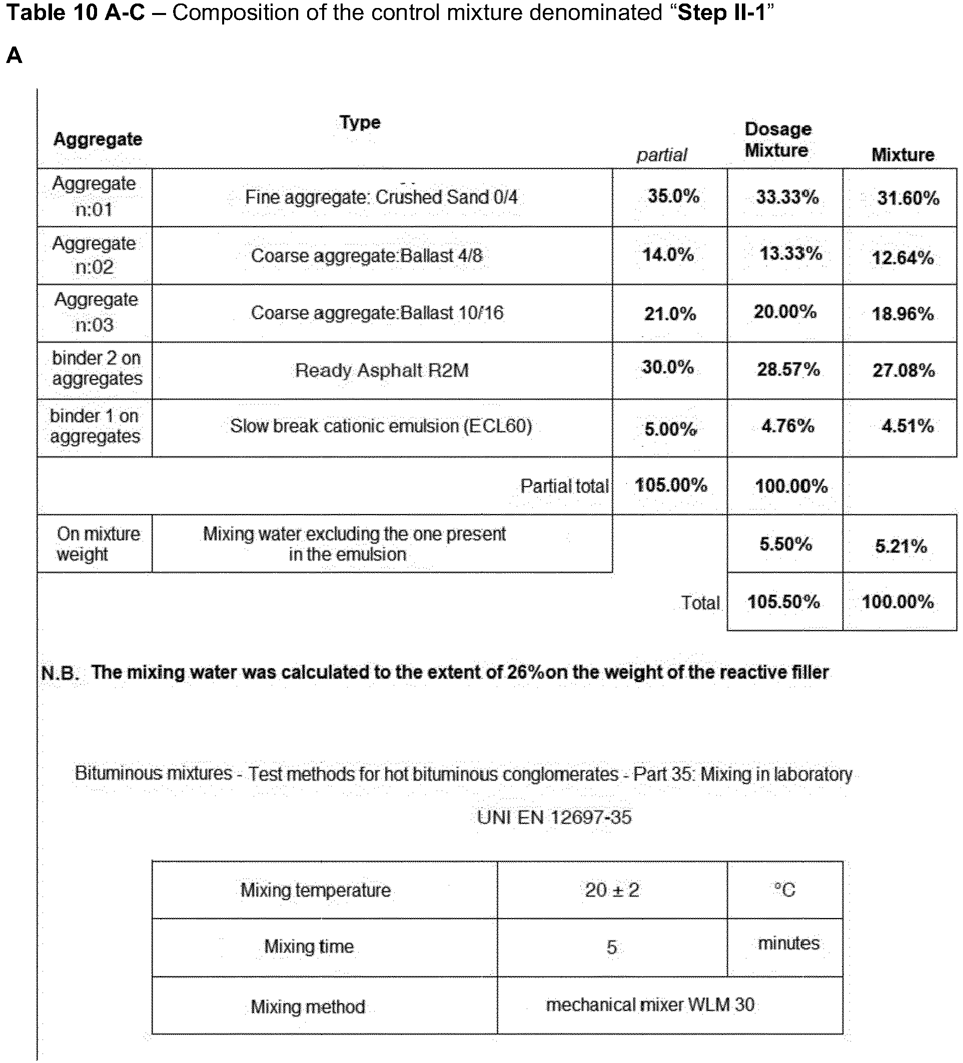

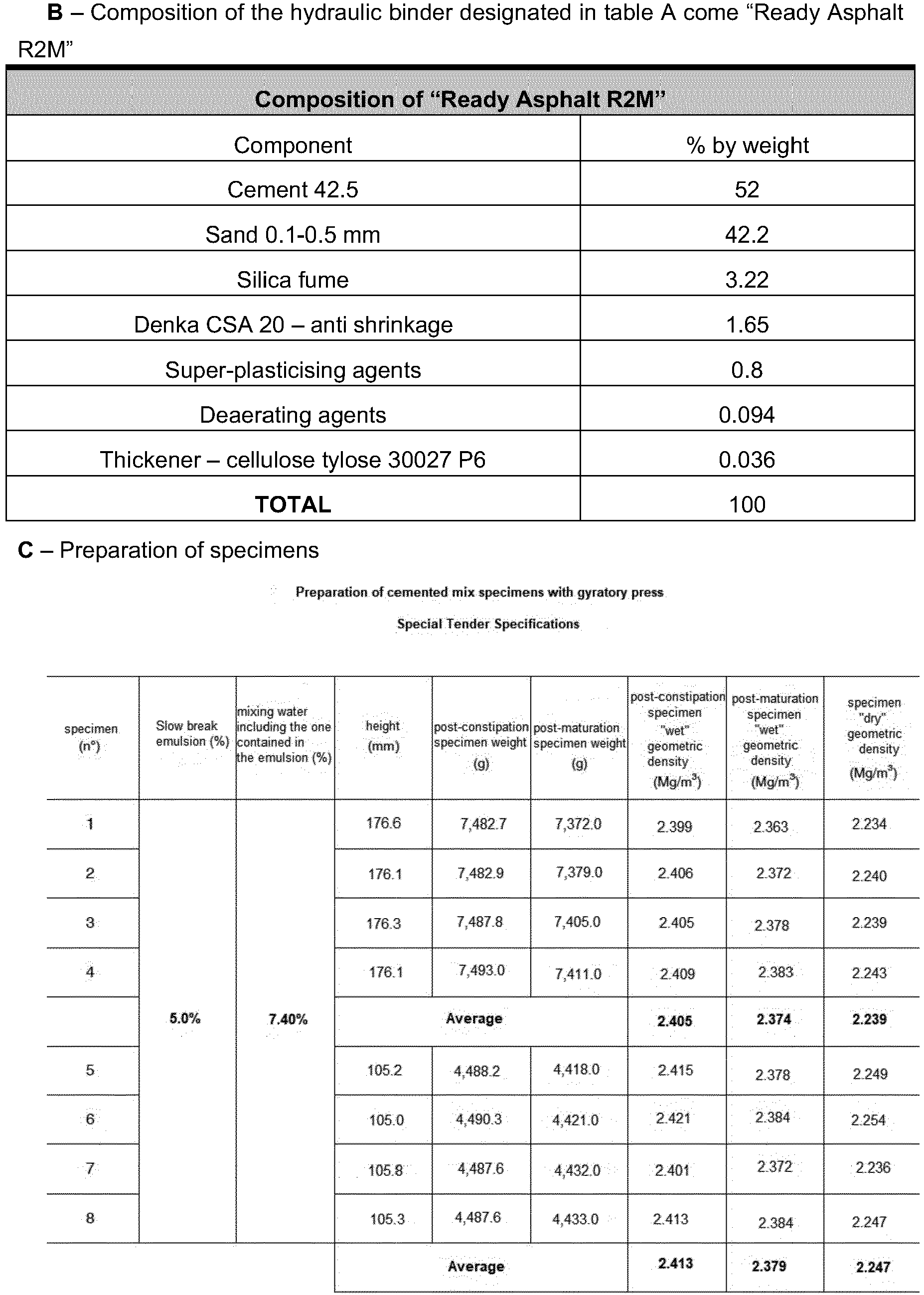

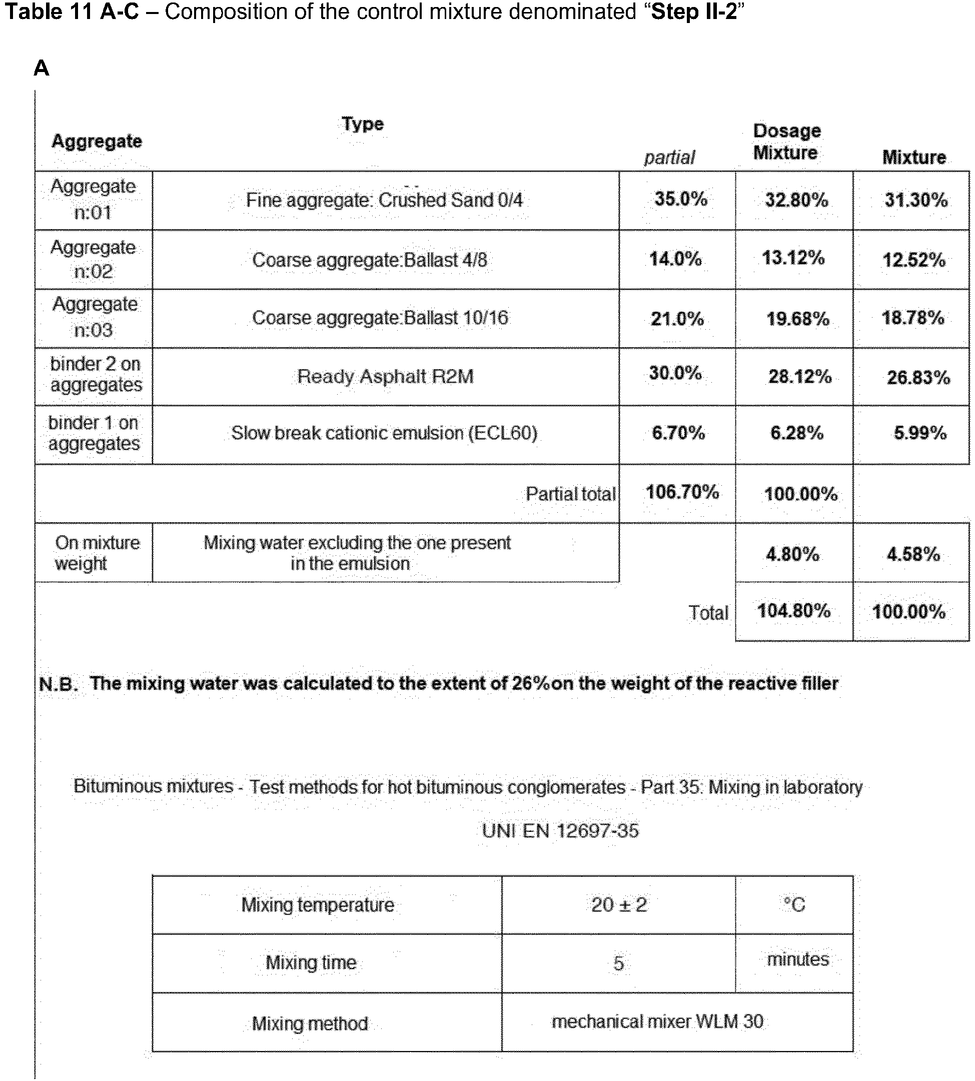

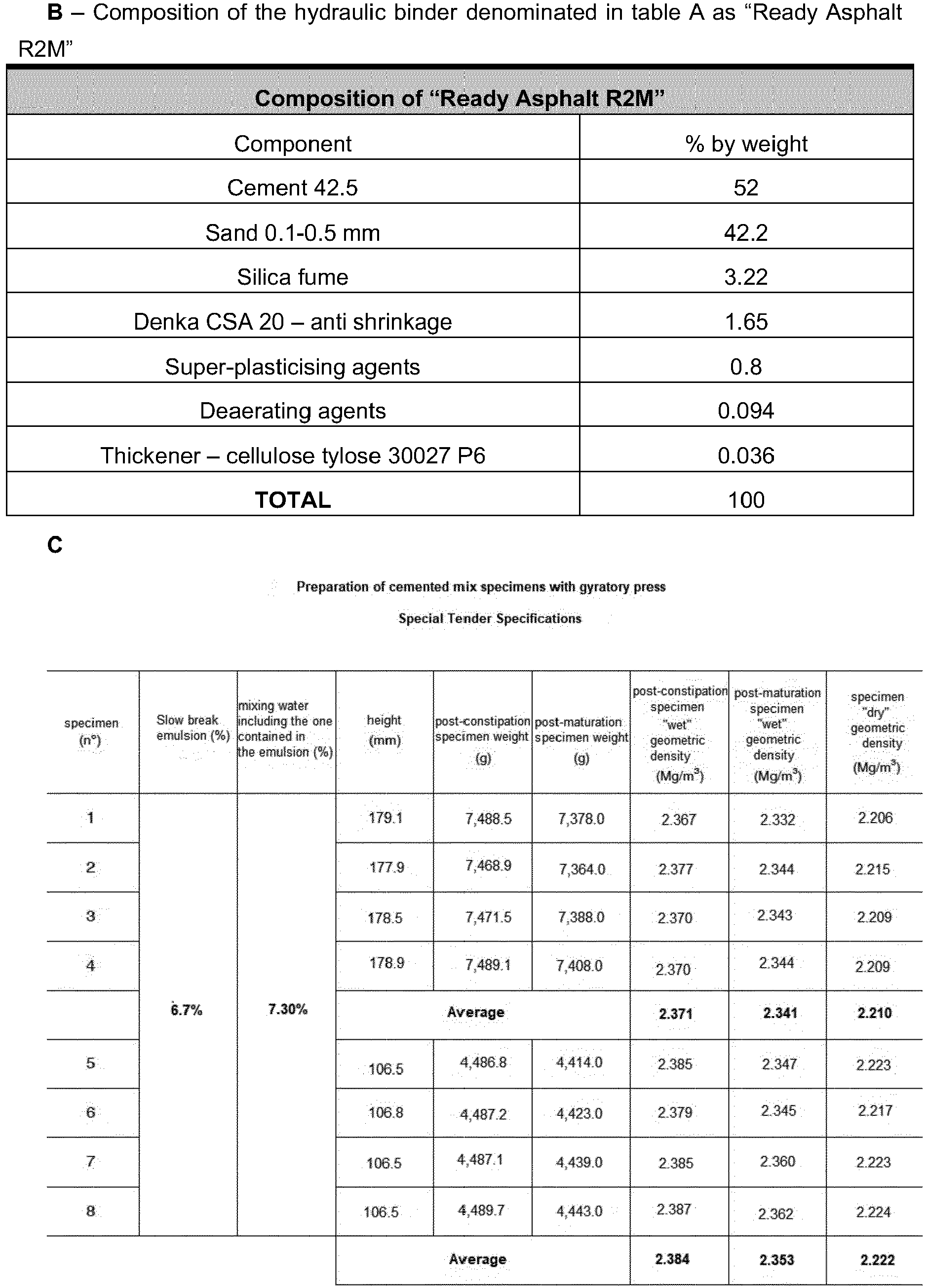

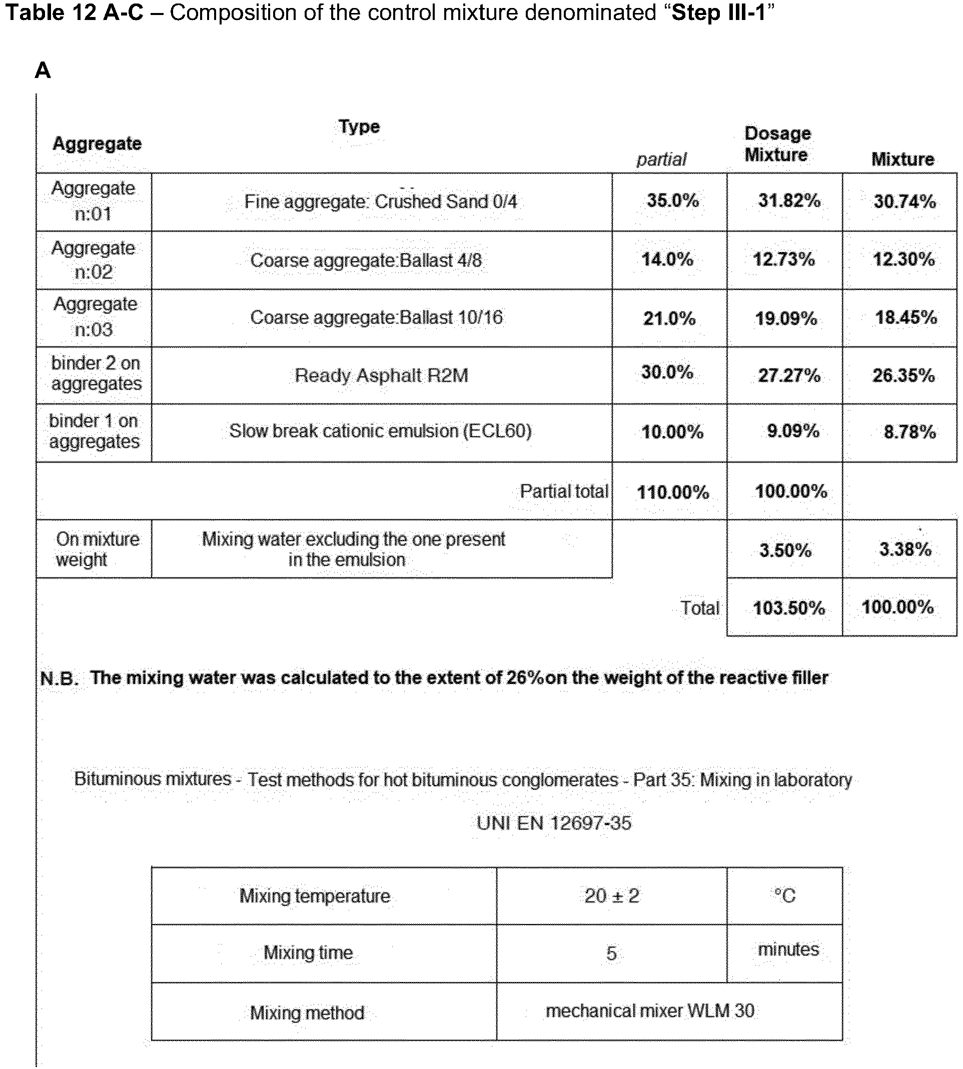

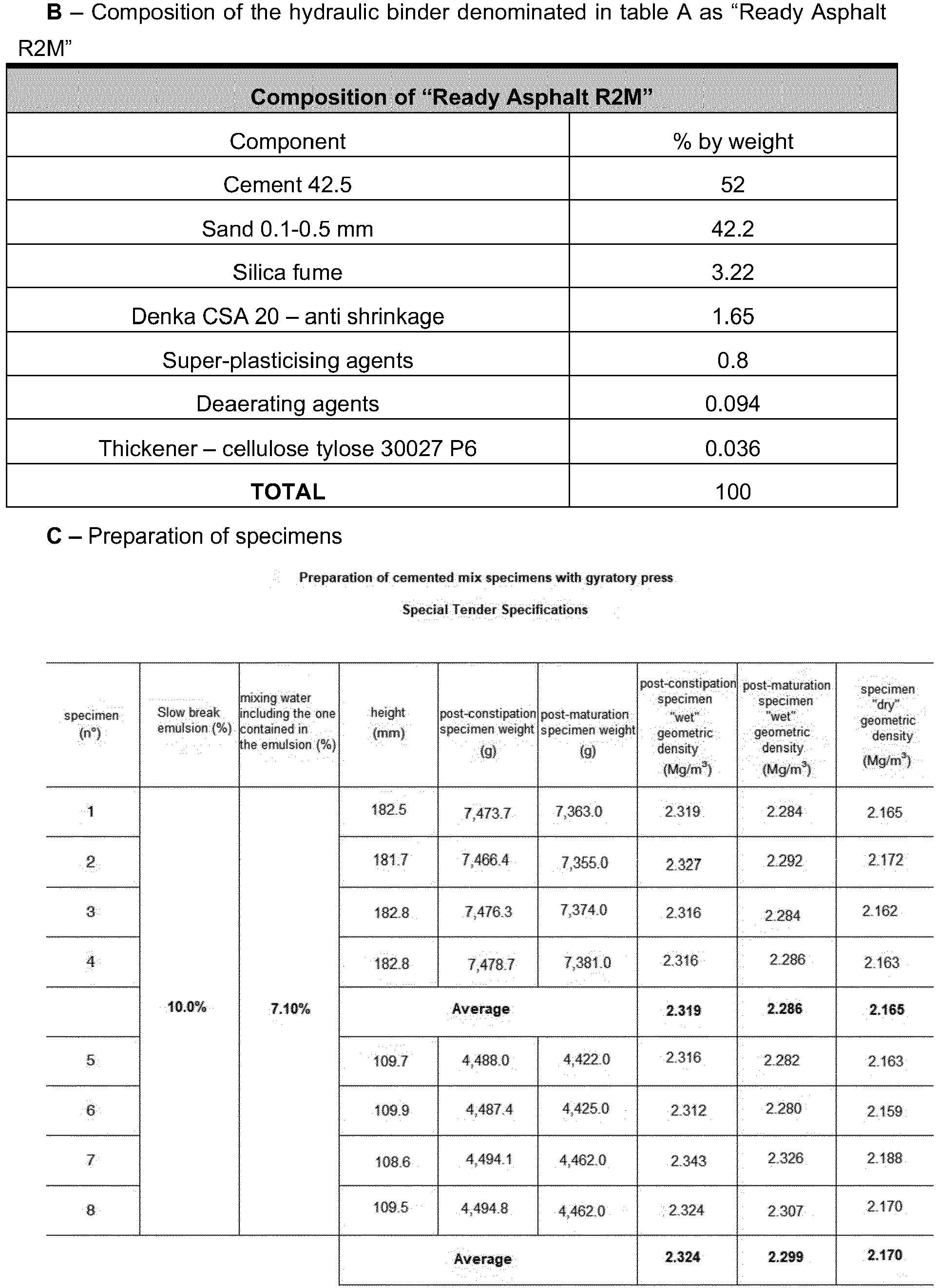

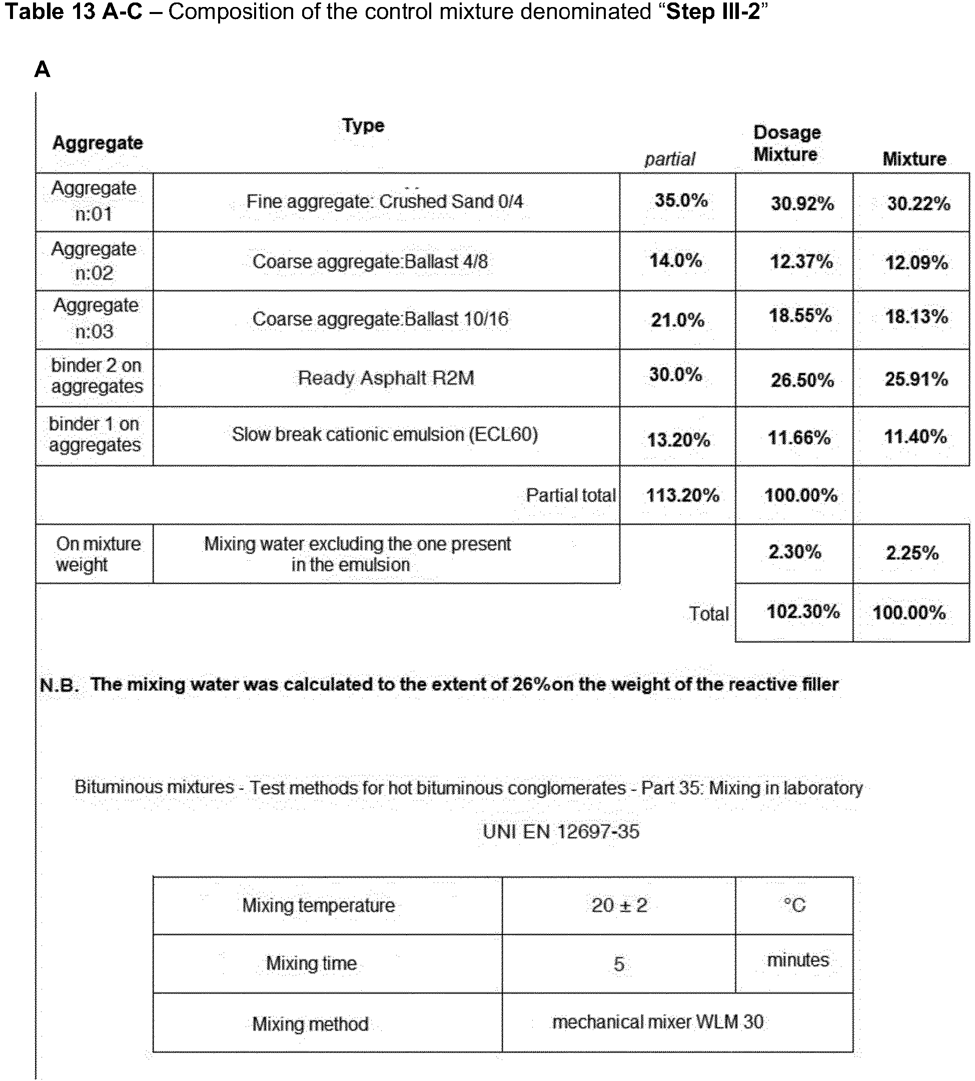

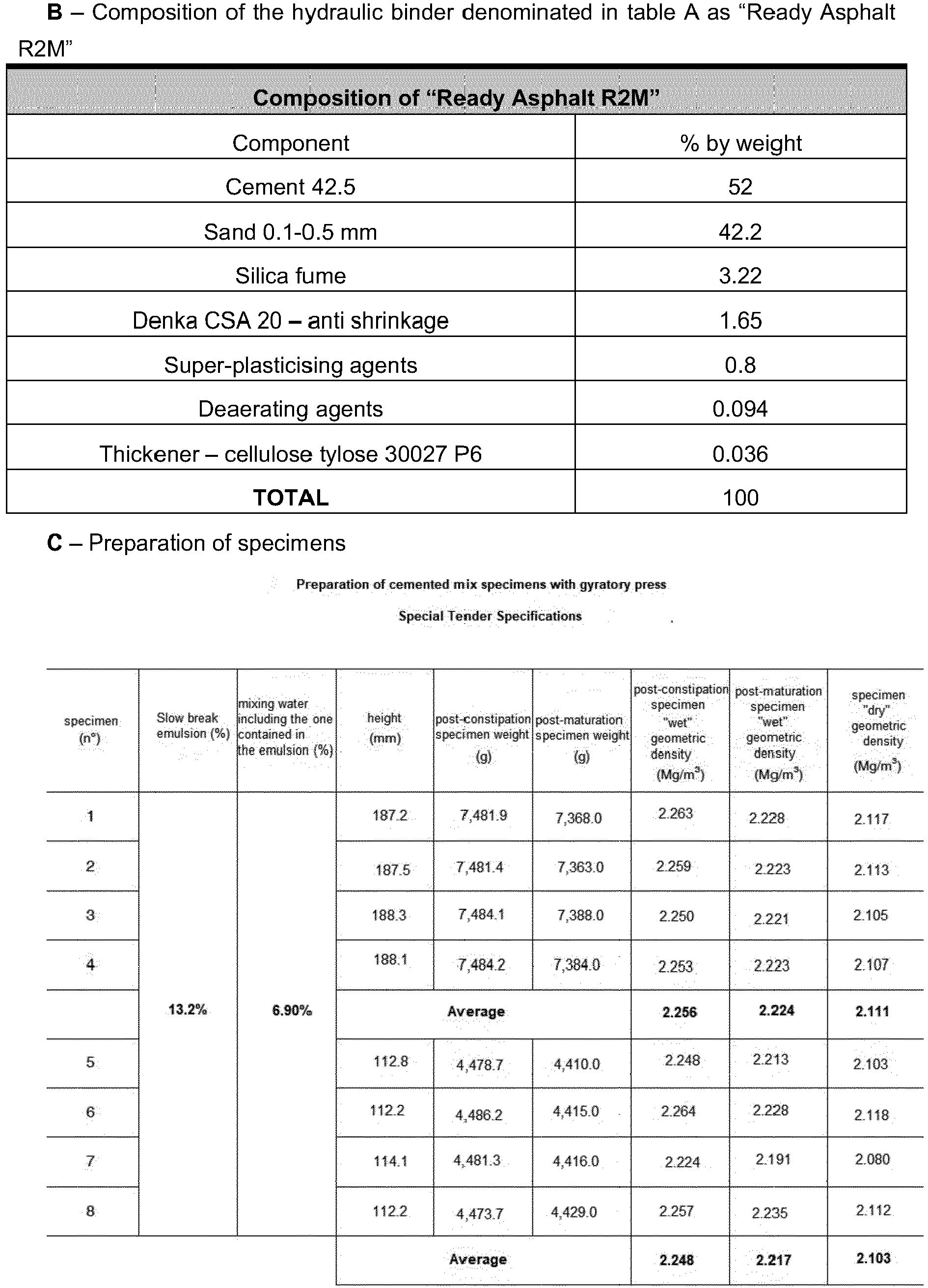

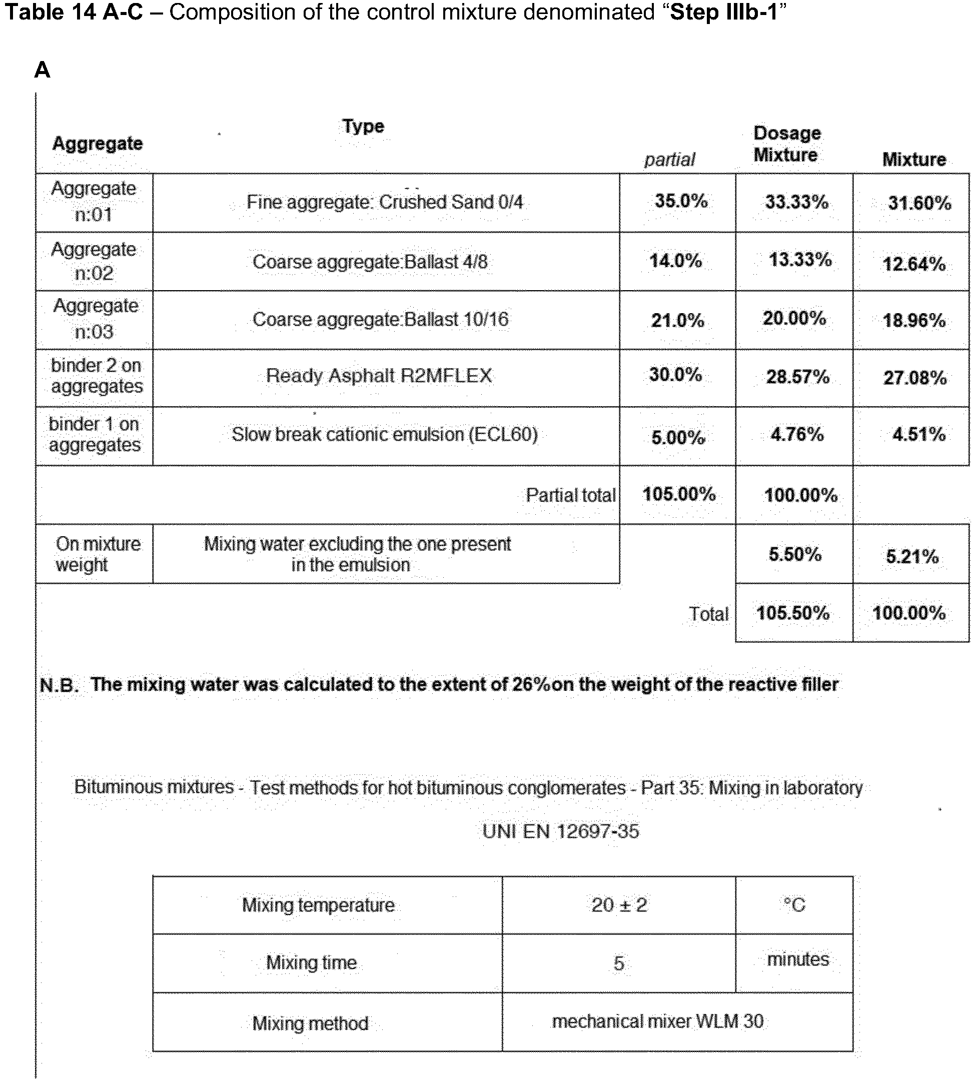

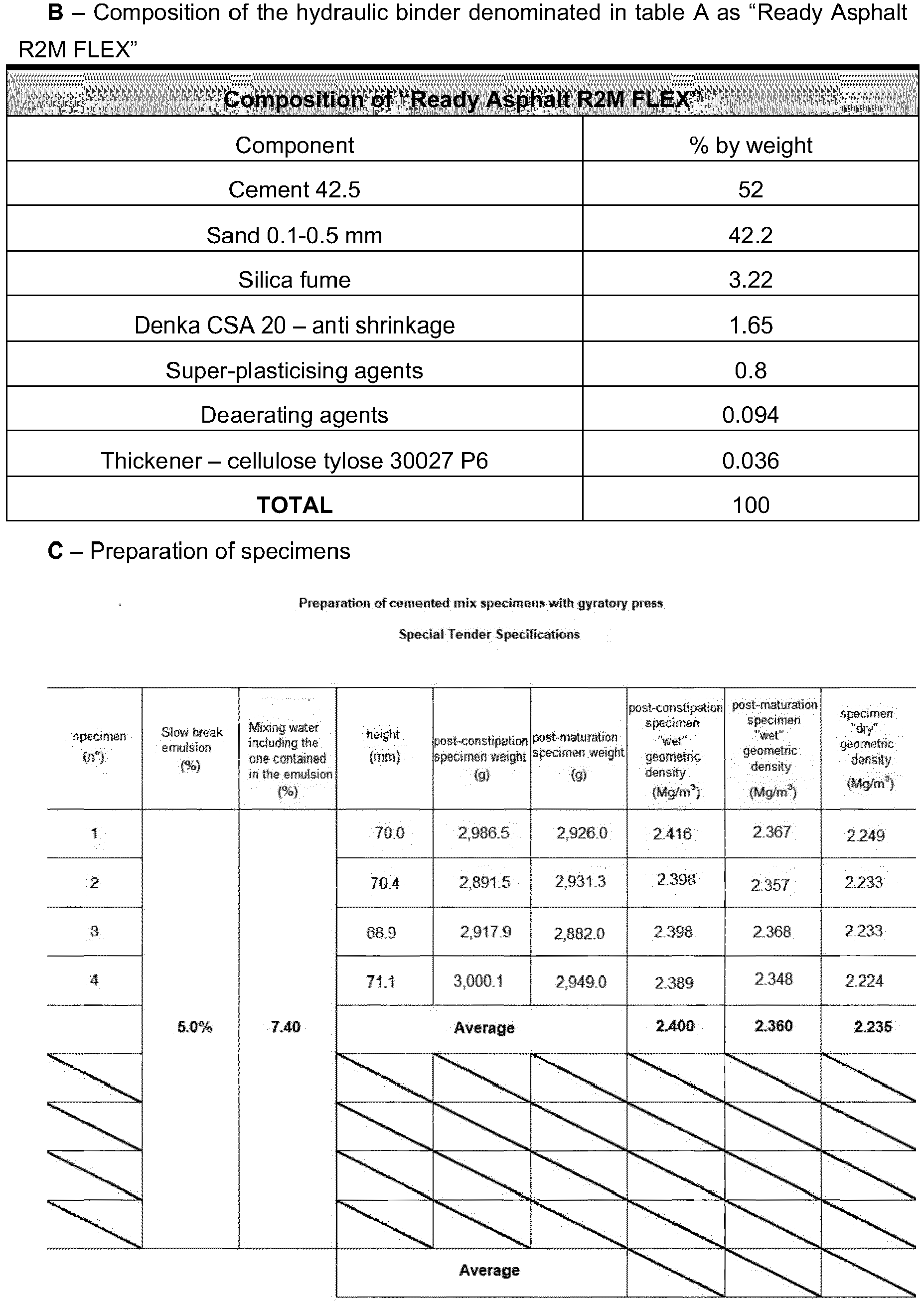

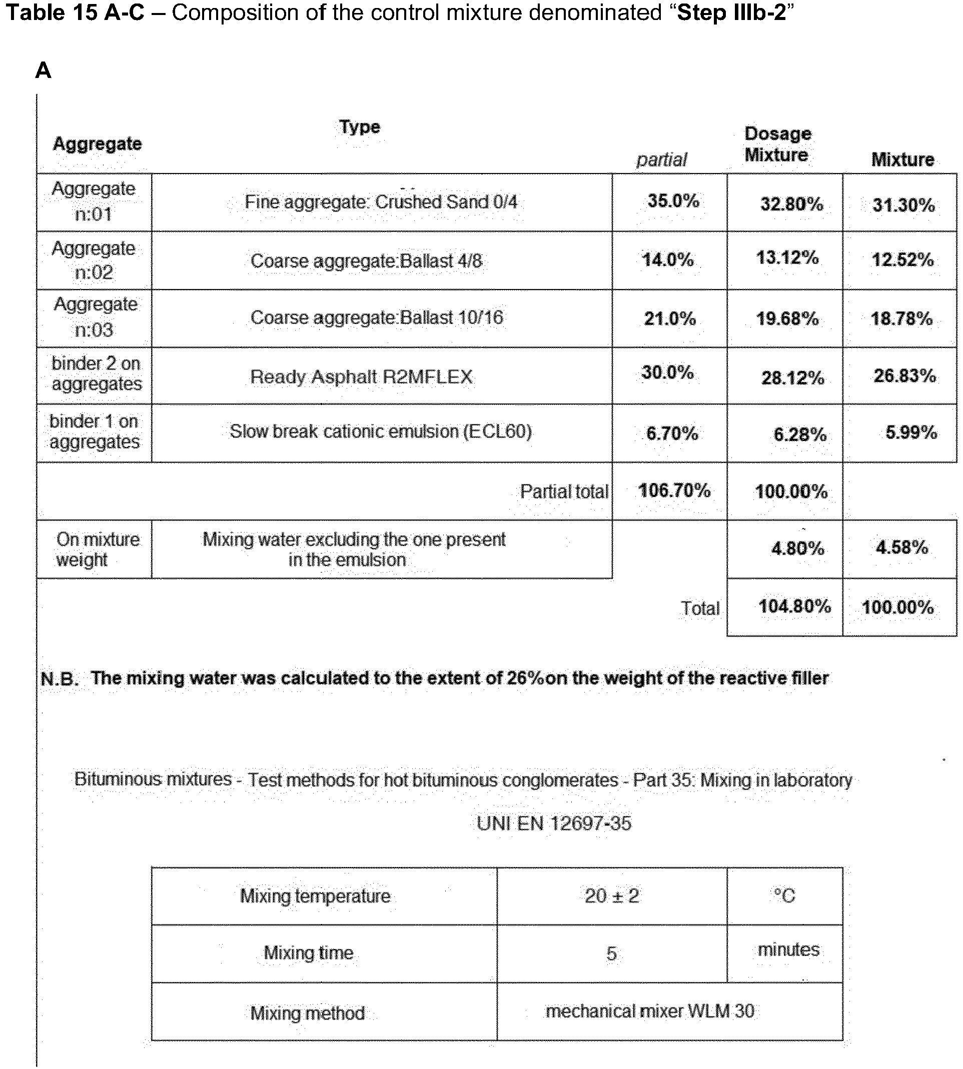

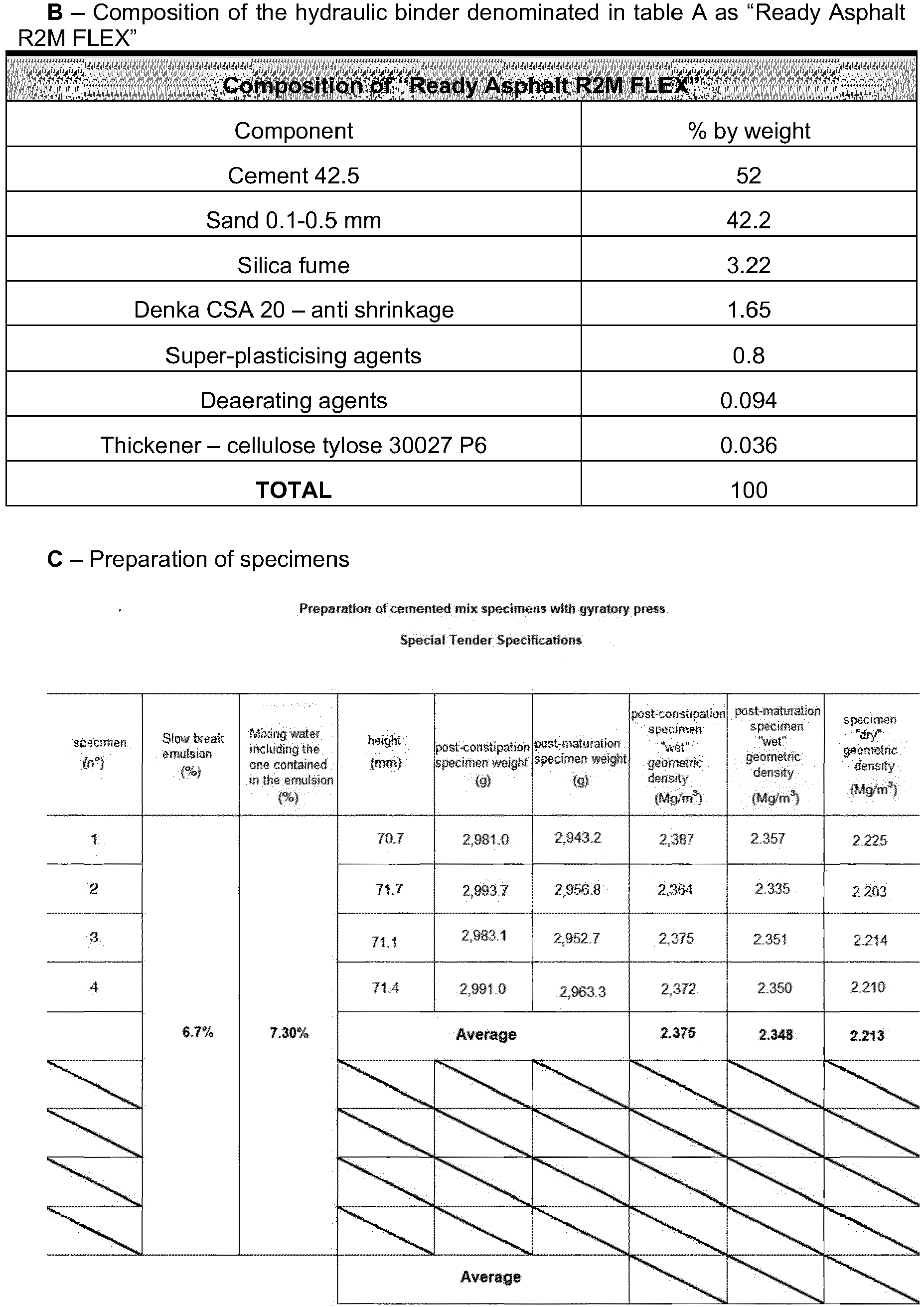

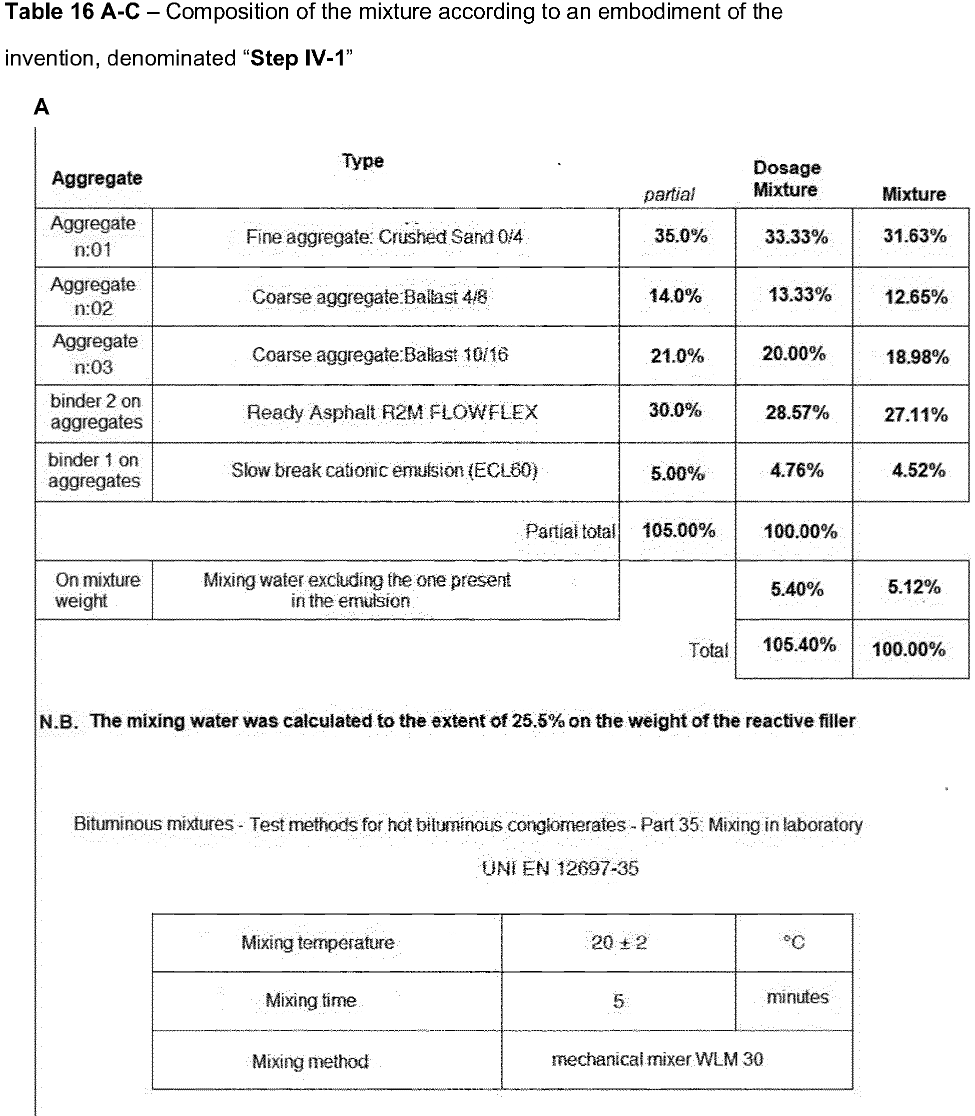

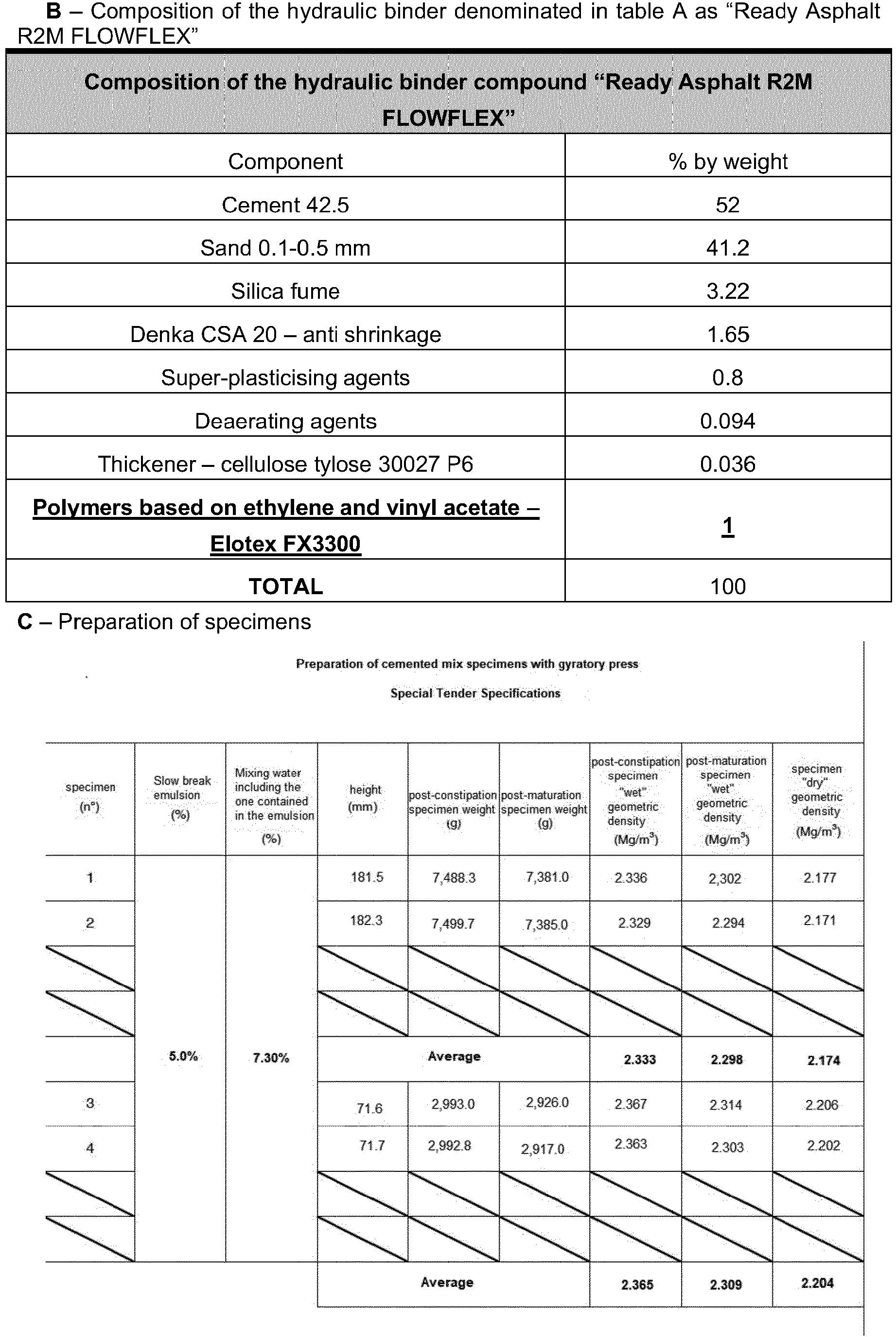

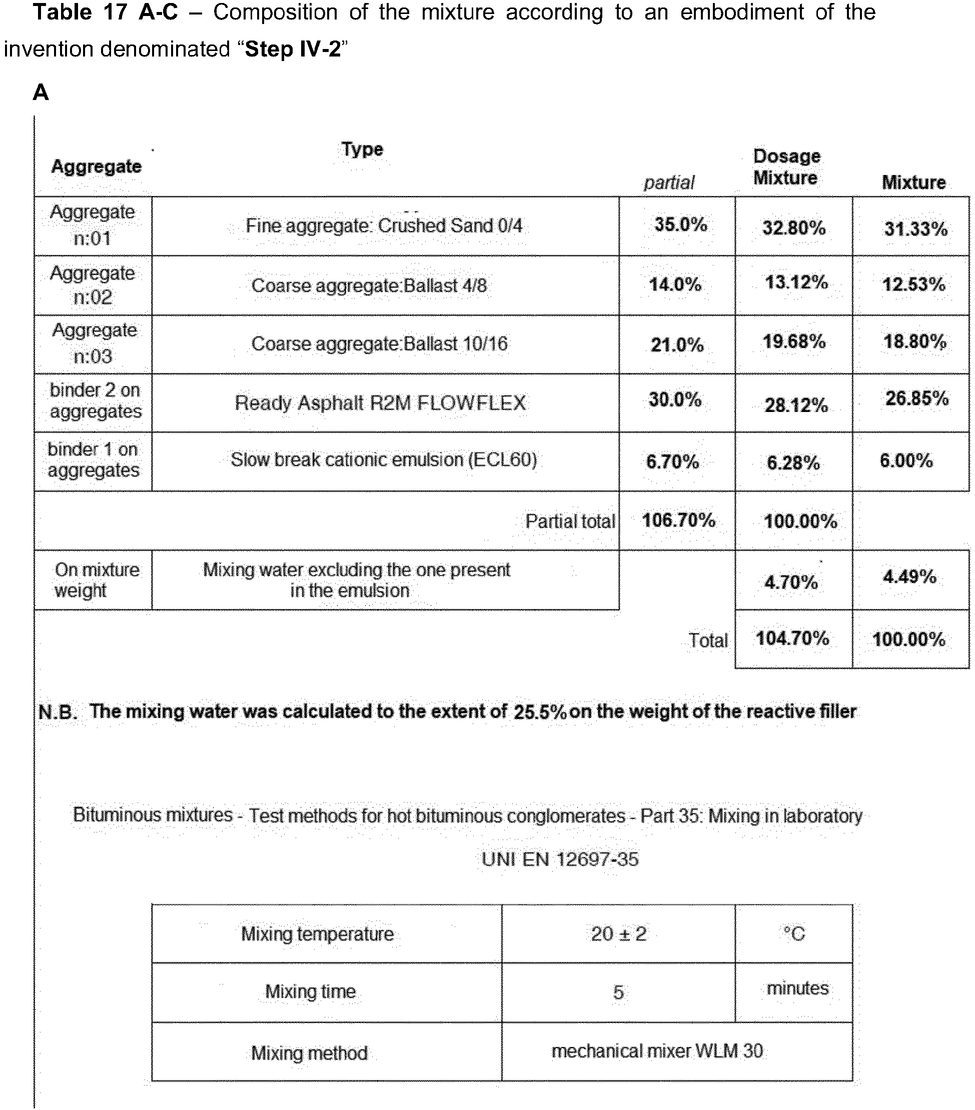

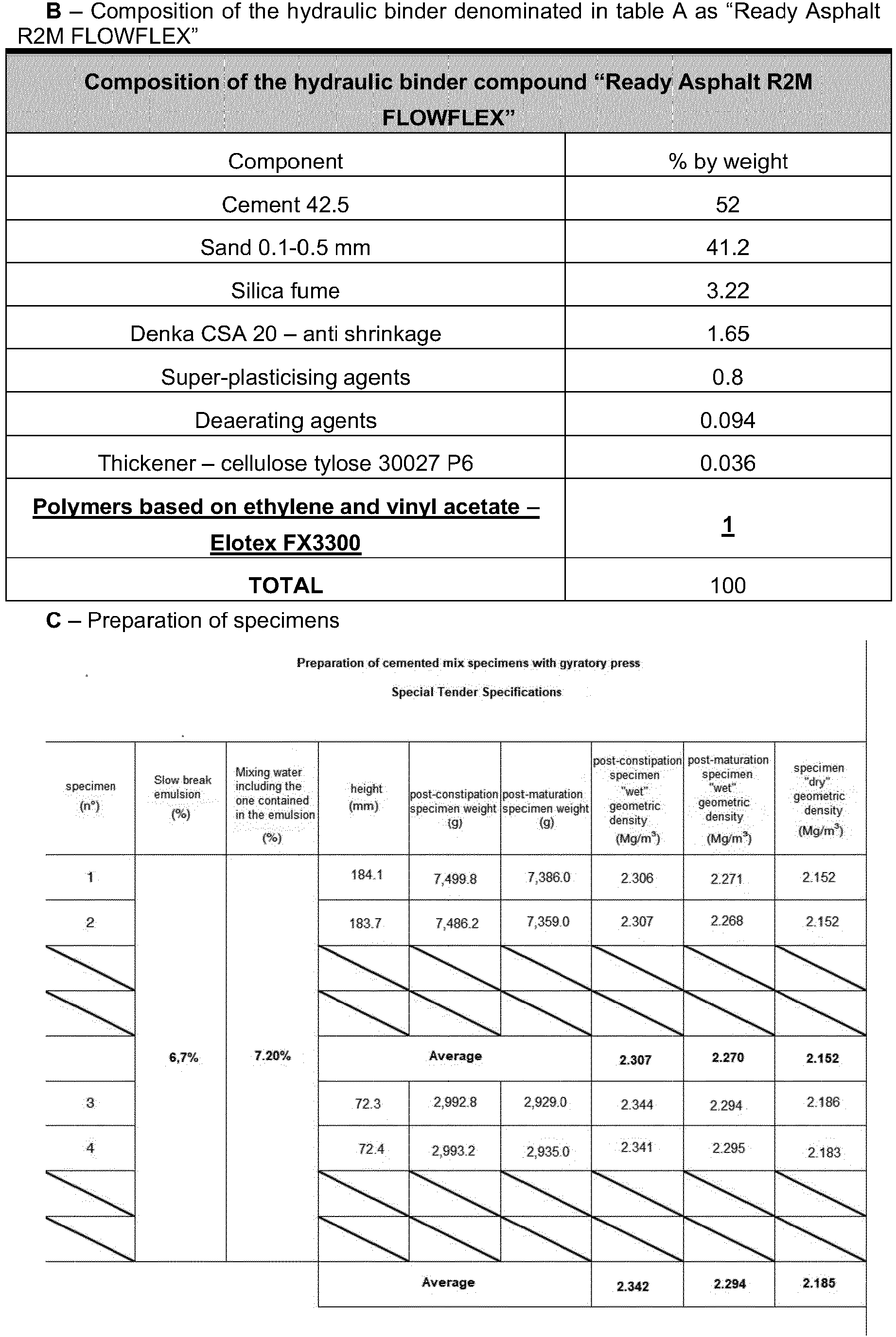

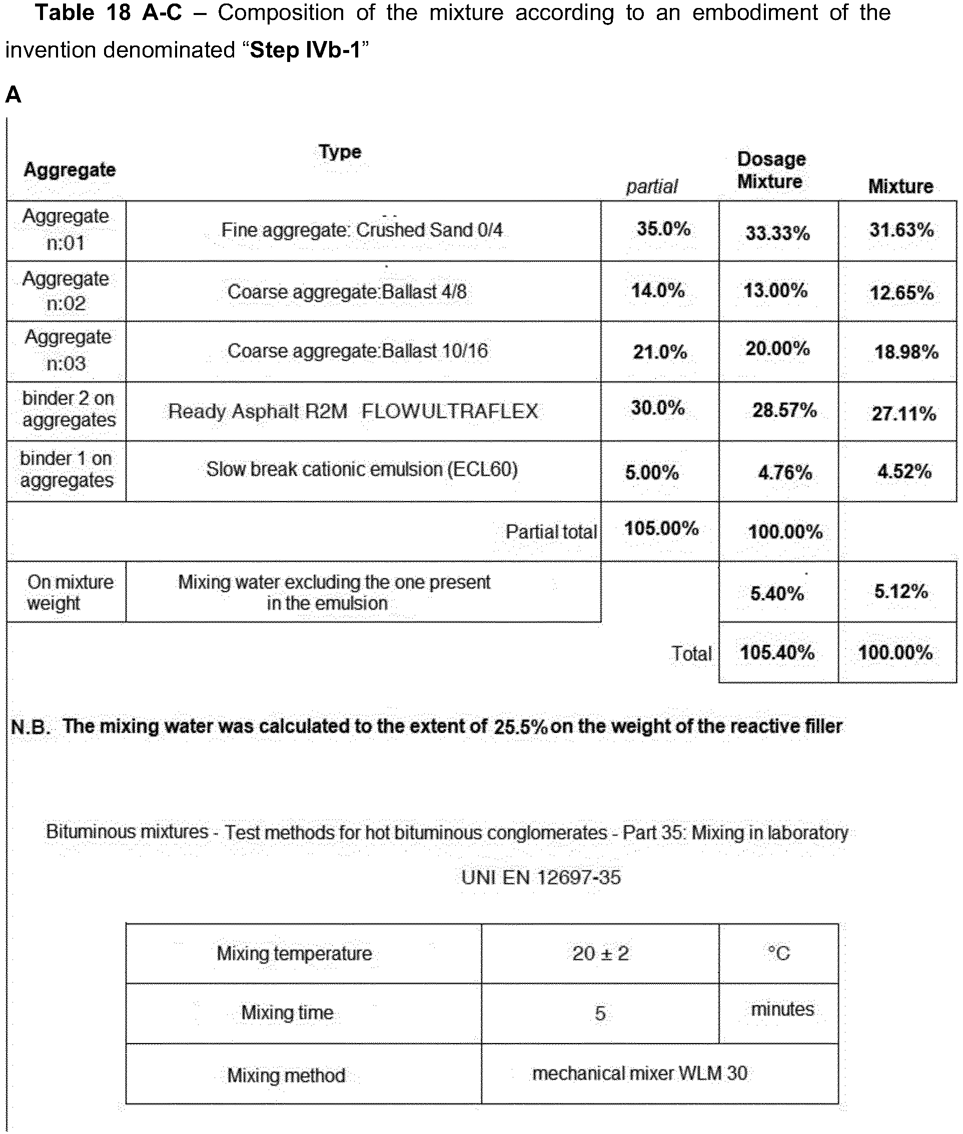

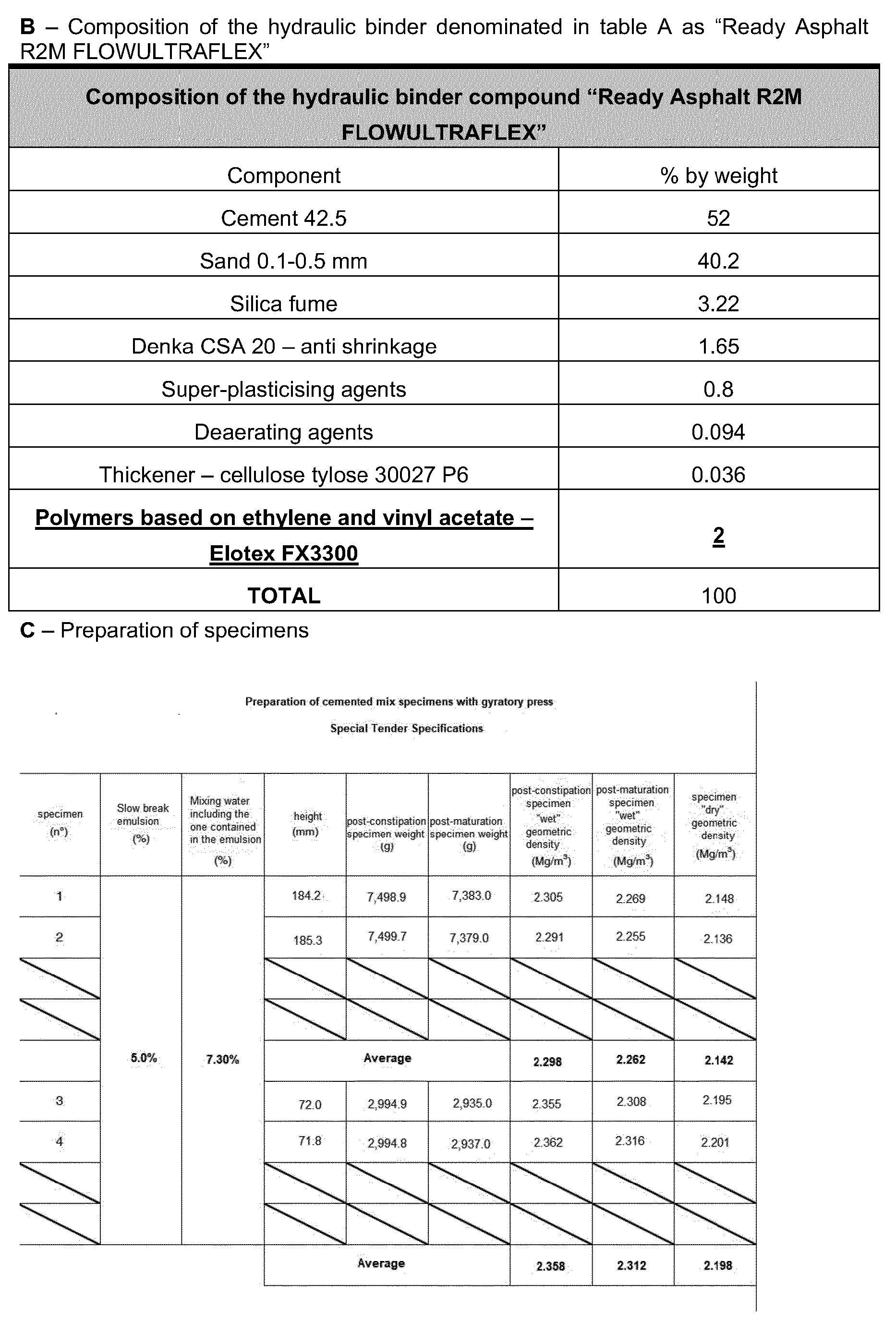

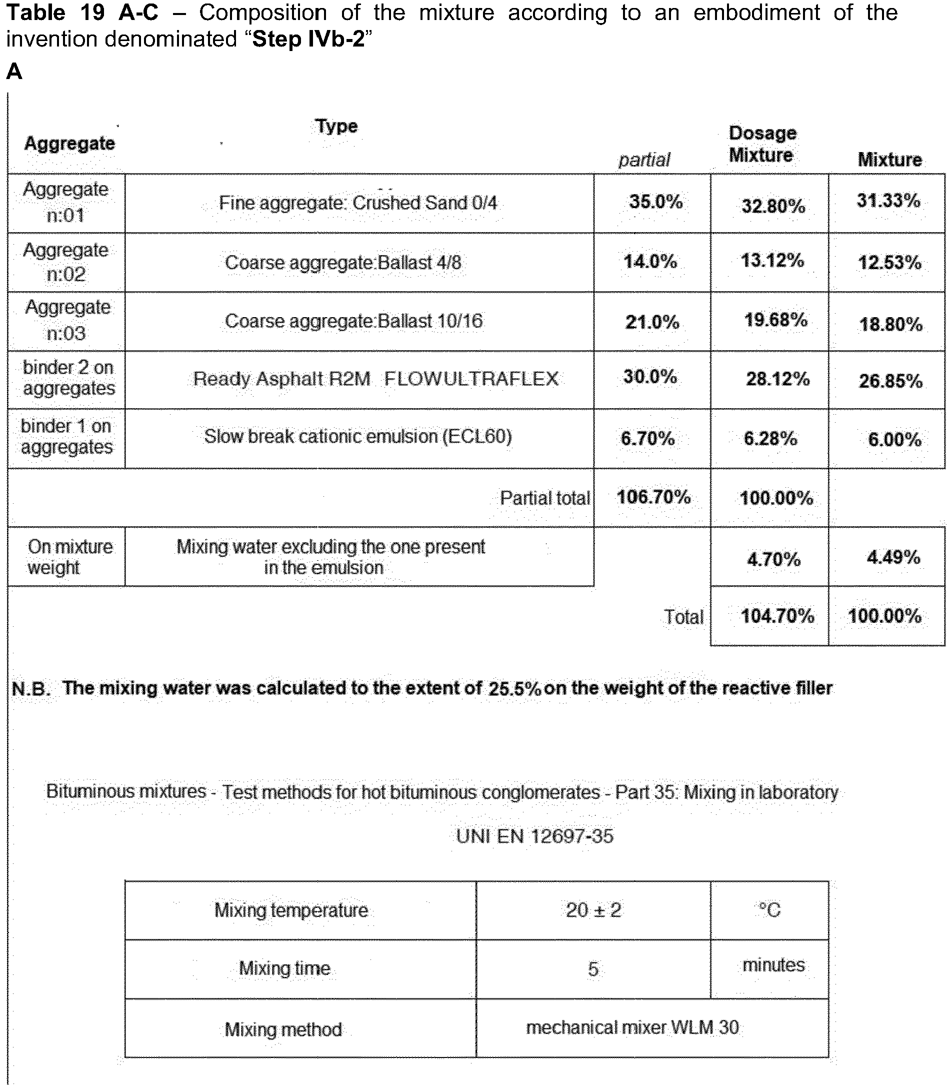

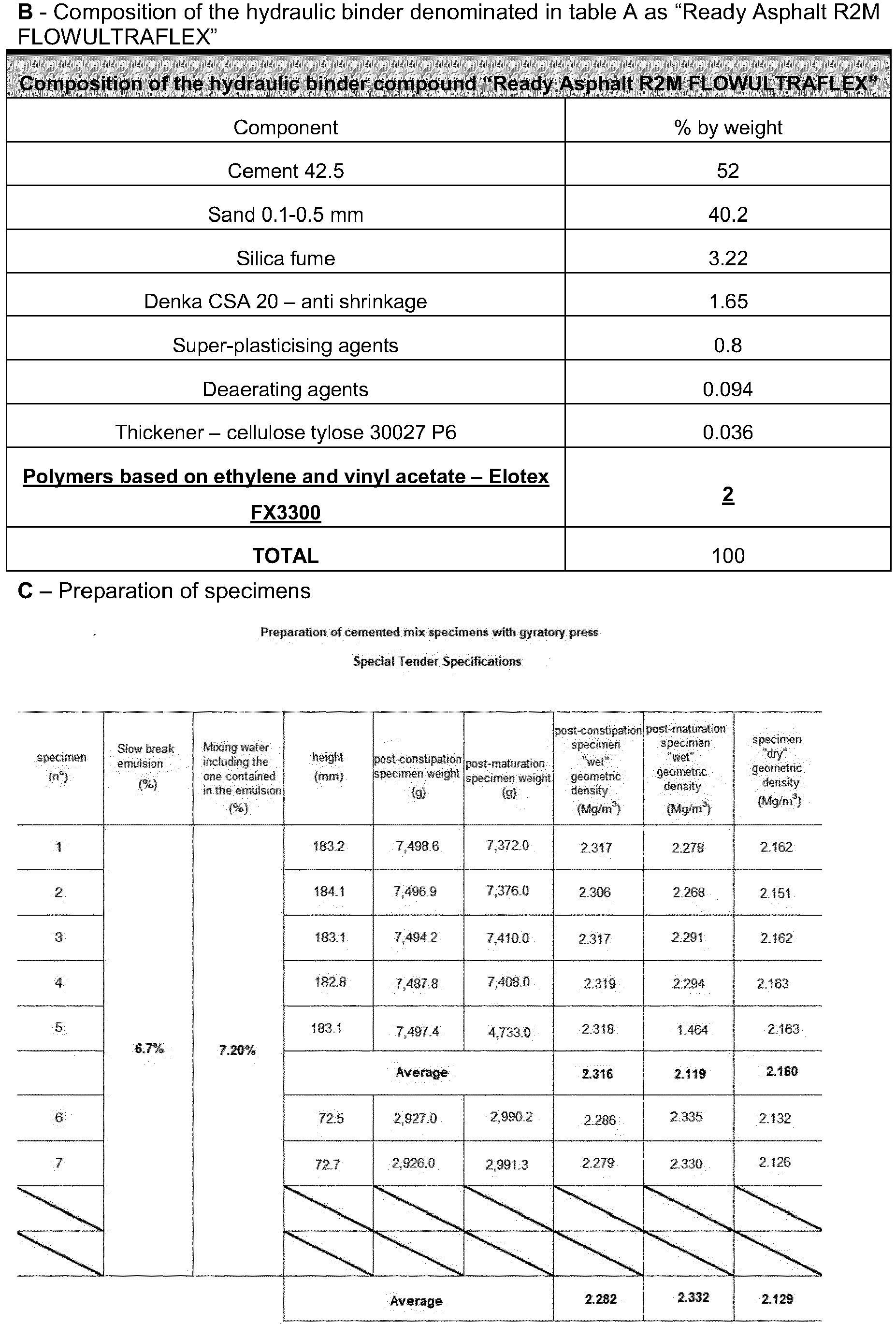

**Table 20 - Composition of the mixture according to an embodiment of the invention denominated "Wet earth"**

| Sample | **Hydraulic binder compound** | Inert granular materials | Slow break cationic bituminous emulsion (ECL60) with 50% water/bitumen content | Total | | Total water content | **Total** |
|---|---|---|---|---|---|---|---|
| **Wet Earth** | 23.8% | 71.43% | 4.77% | 100% | | 8% | 108% |

| **Composition of the hydraulic binder compound** | | | | | | | |
|---|---|---|---|---|---|---|---|
| Component | | | | | % by weight | | |
| Cement 42.5 | | | | | 57.2 | | |
| Sand 0.1-0.5 mm | | | | | 18.8 | | |
| Silica fume | | | | | 3.22 | | |
| Denka CSA 20 - anti-shrinkage | | | | | 1 | | |
| Carbonate | | | | | 18.8 | | |
| Thickener - cellulose tylose 30027 P6 | | | | | 0.9 | | |
| **Polymers based on ethylene and vinyl acetate - Elotex FX3300** | | | | | **1.4** | | |
| **TOTAL** | | | | | 100 | | |

**Table 21 - Composition of the mixture according to an embodiment of the invention denominated "Eco-FlowMix"**

| Sample | **Hydraulic binder compound** | Inert granular materials | Slow break cationic bituminous emulsion (ECL60) with 40% water/bitumen content | **Total** | | Total water content | **Total** |
|---|---|---|---|---|---|---|---|
| **Eco-FlowMix** | 26.79 - 28.3% | 62.5-66.04% | 5.66-10.71% | 100% | | 5-12% | c.a.105-112% |

| **Composition of the hydraulic binder compound** | | | | | | | |
|---|---|---|---|---|---|---|---|
| Component | | | | | % by weight | | |
| Cement 52.5 | | | | | 5 | | |
| Calcium hydroxide | | | | | 5 | | |
| Sand 0.1-0.5 mm | | | | | 51.5 | | |
| Fine slag | | | | | 15 | | |
| Denka CSA 20 - anti-shrinkage | | | | | 0.5 | | |
| Pozzolana | | | | | 20 | | |
| Super-plasticising | | | | | 0.9 | | |
| Deaerating | | | | | 0.1 | | |
| Thickener - cellulose tylose 30027 P6 | | | | | 0.005 | | |
| Sodium chloride | | | | | 0.004 | | |
| **Polymers based on ethylene and vinyl acetate - Elotex FX3300** | | | | | **2** | | |
| **TOTAL** | | | | | 100 | | |

### Example 1 - Results of the UNI EN 12697-26 Standard Test

The authors of the present invention have characterized the stiffness of the road materials (measured in terms of stiffness modulus, or elastic modulus E, MPa) obtained by using the mixtures having the composition designated in the preceding Tables 7-21, according to EN 126697-26 standard test. The stiffness modulus in fact is fundamental for analysing the effort-deformation response of a road material subjected to a traffic load.

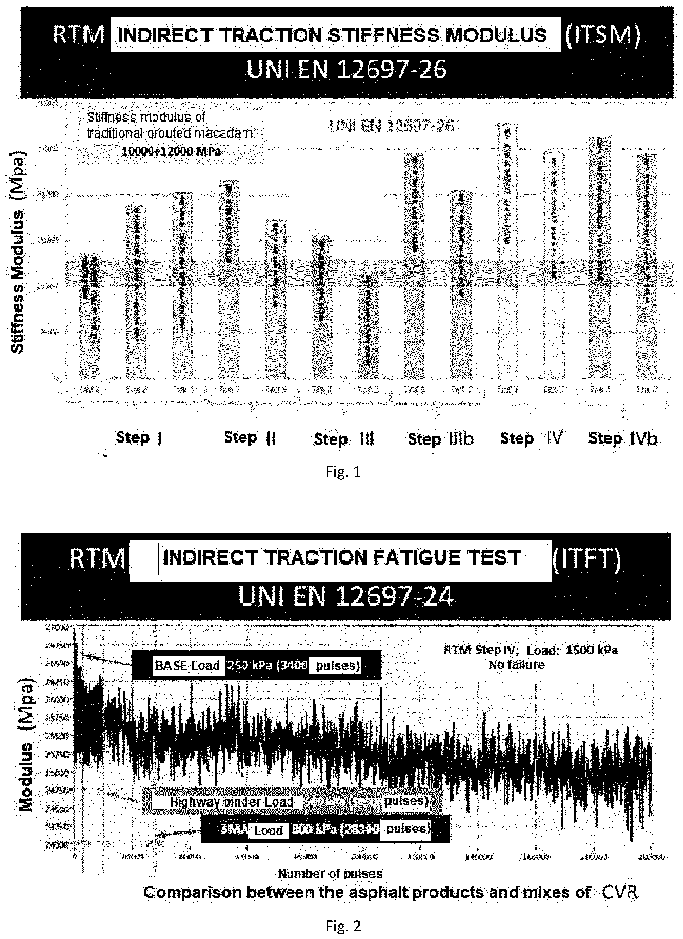

As shown by the results illustrated in the following Table 22 and in Figure 1, the samples prepared with the mixtures denominated **"Step IV"** and **"Step IV-b"**, containing polymers based on ethylene-vinyl acetate (ELOTEX^{®} FX3300) in the amounts according to the present invention, showed significantly higher values of Stiffness modulus (or elastic module, E) (MPa) than the specimens prepared with compositions not containing such polymers, or than the traditional *"grouted macadam",* which usually is characterized by a stiffness modulus comprised between 10000 and 12000 MPa.

**Table 22 - Values of Elastic modulus**

| Tested mixture | | **E module (MPa) (UNI EN 12697-26) after 28 days** |
|---|---|---|
| Step I | Test 1 | 13564 |
| | Test 2 | 18796 |
| | Test 3 | 20141 |
| Step II | Test 1 | 22105 |
| | Test 2 | 17886 |
| Step III | Test 1 | 15559 |
| | Test 2 | 11328 |
| Step III-b "Flex" | Test 1 | 24458 |
| | Test 2 | 20354 |
| Step IV "FlowFlex" | Test 1 | 27773 |
| | Test 2 | 24615 |
| Step IV-b "FlowUltraFlex" | Test 1 | 26311 |
| | Test 2 | 24400 |

The authors of the present invention then tested the fatigue resistance of the road materials obtained by using the mixtures having the compositions shown in Tables 7-21 according to EN 126697-24 standard (Indirect test of fatigue resistance).

The EN 126697-24 Standard test consists in a simulation in laboratory of the passage of vehicles on road materials, with the purpose of evaluating the resistance of the above-mentioned materials to fatigue. The test is performed by applying a load of sinusoidal type or other load types controlled on the surface of the material to be tested, by using different samples and supports, and monitoring the elastic modulus of the material depending upon the number of cycles (or pulses) applied thereto. The so-determined fatigue resistance of the material then is used as relative index of the performance of the material itself. The road material subjected to the test at first is loaded so as to determine a reference deformation of the material as well as the elastic modulus caused by the load of cyclic type which is applied during the test.

The load is applied cyclically so as to simulate the passage of vehicles on the road material to be tested.

Generally, a load equal to 800 kPa is used as reference load since it represents the load of axial type admissible on the Italian roads.

It is believed that the analysed material failed the EN 126697-24 standard test when the deformation of the same with respect to the initial reference deformation doubled - or when the elastic modulus of the same, with respect to the initial reference elastic modulus, halved. In a road material consisting of several layers, generally the elastic modulus doubles or halves from layer to layer, based upon the direction (upwards or downwards).

The performances of the materials prepared with the mixtures having the compositions shown in tables 7-21 were compared then with the performances of the following traditional road materials (from the upper layers downwards):
(i) a typical poured asphalt (split-mastic asphalt, SMA), loaded with 800 kPa,
(ii) a bituminous highway binder loaded with 500 kPa; and
(iii) a cold base loaded with 250 kPa.

Generally, the asphalt SMA (i) offers exceptional performances with respect to a cold base (iii) and to a traditional highway binder (ii), by reaching a significantly higher number of cycles in EN 126697-24 test before breaking, at a significantly higher load than that applied to the samples (ii) and (iii).

As shown even by the reference layers shown in the exemplifying **Figure 2****,** in the EN 126697-24 Standard Test the asphalt SMA loaded with 800 kPa failed the test at 28,300 pulses, whereas the highway binder loaded with 500 kPa and the Base loaded with 250 kPa failed the test at 10,500 pulses and 3,400 cycles of pulses, respectively. Surprisingly, the samples prepared by using the mixtures denominated **Step IV** (Tests 1-2) and **Step IV-b** (Tests 1-2) on the contrary overcame all expectations. In fact, as highlighted in the exemplifying **Figure 2**, the specimen implemented with the mixture denominated **Step IVb-1** having the composition shown in Table 18, resulted to be able to reach 200,000 cycles when subjected to a load of 1,500 kPa, a load equal to almost the double with respect to the axial load admissible on the Italian roads (that is 800 kPa) and with which the asphalt SMA stood out as extraordinary performing material with respect to materials (ii) and (iii).

From the results illustrated in the following Table 23, it results evident that, by comparing the number of reached cycles and the load thereto the materials are subjected with the amount of polymers added to the hydraulic binder compound used in the mixture for the preparation of the same, an increase in the amount of polymers in the hydraulic binder compound from 1% to 2%, the % of used emulsion and of hydraulic binder compounds being equal, allows to increase significantly the performances of the resulting material in terms of fatigue resistance.

In fact, as it comes out from the results shown in Table 23, exceptionally, the materials prepared with the mixtures according to the present invention resulted to be "indestructible", that is capable of overcoming the "failure criteria" according to UNI EN 12697-24 standard test.

**Table 23**

| | Cycles@load (UNI EN 12697-24) | Compression (N/mm²) (UNI EN 13286-41) | Tensile (N/mm²) (UNI EN 13286-42) |
|---|---|---|---|
| Step IV-1 | 172500@1500KPa | 22.12 (28 days) | 3.32 (28 days) |
| Step IV- 2 | 170200@1500KPa | 17.26 (28 days) | 2.72 (28 days) |
| Step IVb-1 | 200000@1500KPa | 17.37 (28 days) | 3.06 (28 days) |
| Step IVb- 2 | 200000@1600KPa | 18.55 (28 days) | 1.86 (28 days) |
| Step Wet Earth | 347400@1800KPa | | |

As shown in the following Table 24, the materials prepared with the mixture denominated Step IV according to the invention in fact break only at 49,100 cycles when subjected to a load equal to 2,000 kPa, that is a load 2.5 times higher than the load admissible on the Italian roads.

**Table 24**

| | | |
|---|---|---|
| | E module (MPa) | Cycles@load |

| | (UNI EN 12697-26) | (UNI EN 12697-24) |
|---|---|---|
| Step IV- 1 | 25813 (28 days) | 110800@1200KPa |
| Step IV-1 | 27522 (28 days) | 165500@1600kPa |
| Step IV- 1 | 28522 (28 days) | 149300@1850kPa |
| Step IV- 1 | 26059 (28 days) | 49100@2000kPa |

### Example 2 - Comparative tests of fatigue resistance according to UNI EN 12697-24 standard test

The authors of the present invention performed additional comparative fatigue tests, according to UNI EN 12697-24 standard test, by using materials prepared with the mixtures having the composition shown in **table 19 A-B** ("Step IVb" **FlowUltraFlex)** and in **table 21** (**Eco-FlowMix**), by varying the content of bituminous emulsion, of the "ELOTEX^{®} FX3300" polymer present therein, as well as the mode for adding the polymer itself to the mixture (in emulsion or in the hydraulic binder compound, respectively), as shown in the following table 25.

**Table 25**

| **N. sample** | **Tested mixture** | **% emulsion** |
|---|---|---|
| 1 | Mixture **"Eco-FlowMix":** no polymer | 10.71% |
| 2 | Mixture **"Eco-FlowMix":** with polymer (2%) | NO emulsion |
| 3 | Mixture **"Eco-FlowMix":** with polymer (2%) added in the hydraulic binder compound | 10.71% |
| 4 | Mixture **"Eco-FlowMix":** with polymer 2% added in the emulsion | 10.71% |
| 5 | Step IVb **"FlowUltraFlex":** with polymer (2%) added in the hydraulic binder compound | 5.66% |
| 6 | Step IVb **"FlowUltraFlex":** with polymer (2%) added in emulsion | 5.66 % |
| 7 | Step IVb **"FlowUltraFlex":** with polymer (2%) added in emulsion | 10.71% |

The results of the fatigue tests performed according to Standard Test on the above-mentioned samples 1-7 are summarized in the following **tables 27-33.**

**Table 26 - Experimental parameters**

| Bituminous mixtures - Test methods for hot bituminous conglomerates - Part 24: Fatigue resistance - Annex E | | | | |
|---|---|---|---|---|
| UNIEN12697-24 | | | | |
| | parameter | u.m. | value | |
| | test temperature | °C | 20 | |
| | loading time | s | 0.10 | |
| | rest time | s | 0.40 | |
| | target deformation 100° pulse | µε | 70 - 400 | |
| | Poisson coefficient | v | 0.35 | |

**Table 27 - Sample 1, Mixture "Eco-FlowMix": (no polymer; emulsion 10.71%)**

| Bituminous mixtures - Test methods for hot bituminous conglomerates - Part 24: Fatigue resistance - Annex E | | | | | | | |
|---|---|---|---|---|---|---|---|
| UNIEN 12697-24 | | | | | | | |
| Applied tension | Stiffness modulus (Mpa) | | Total recovered def. (µm) | | Total recoverable strain (µε) | | Total pulses |
| kPa | 100° pulse | last pulse | 100° pulse | last pulse | 100° pulse | last pulse | n° |
| **614** | **12,354** | **6,177** | **7.44** | **14.28** | **103** | **197** | **13,660** |

**Table 28 - Sample 2, Mixture "Eco-FlowMix": (2% polymer; NO emulsion)**

| Bituminous mixtures - Test methods for hot bituminous conglomerates - Part 24: Fatigue resistance - Annex E | | | | | | | |
|---|---|---|---|---|---|---|---|
| UNIEN 12697-24 | | | | | | | |
| Applied tension | Stiffness modulus (Mpa) | | Total recovered def. (µm) | | Total recoverable strain (µε) | | Total pulses |
| kPa | 100° pulse | last pulse | 100° pulse | last pulse | 100° pulse | last pulse | n° |
| **635** | **24,618** | **23,411** | **3.89** | **4.00** | **54** | **55** | **500,000** |

**Table 29 - Sample 3, Mixture "Eco-FlowMix": (2% polymer added in the hydraulic binder compound; 10.71% emulsion)**

| Bituminous mixtures - Test methods for hot bituminous conglomerates - Part 24: Fatigue resistance - Annex E | | | | | | | |
|---|---|---|---|---|---|---|---|
| UNIEN 12697-24 | | | | | | | |
| Applied tension | Stiffness modulus (Mpa) | | Total recovered def. | | Total recoverable strain (µε) | | Total pulses |
| kPa | 100° pulse | last pulse | 100° pulse | last pulse | 100° pulse | last pulse | n° |
| **629** | **12,238** | **6,392** | **7.92** | **15.88** | **109** | **219** | **52,960** |

**Table 30 - Sample 4, Mixture "Eco-FlowMix": (2% polymer added in emulsion; 10.71% emulsion)**

| . Bituminous mixtures - Test methods for hot bituminous conglomerates - Part 24: Fatigue resistance - Annex E | | | | | | | |
|---|---|---|---|---|---|---|---|
| UNI EN 12697-24 | | | | | | | |
| Applied tension | Stiffness modulus (Mpa) | | Total recovered def. (µm) | | Total recoverable strain (µε) | | Total pulses |
| kPa | 100° pulse | last pulse | 100° pulse | last pulse | 100° pulse | last pulse | n° |
| **630** | **13,939** | **6,919** | **6.53** | **13.40** | **90** | **185** | **384,910** |

**Table 31 - Sample 5, Mixture Step IVb "FlowUltraFlex": (2% polymer added in hydraulic binder compound; 5.66% emulsion)**

| Bituminous mixtures - Test methods for hot bituminous conglomerates - Part 24: Fatigue resistance - Annex E | | | | | | | |
|---|---|---|---|---|---|---|---|
| UNIEN 12697-24 | | | | | | | |
| Applied tension | Stiffness modulus (Mpa) | | Total recovered def. (µm) | | Total recoverable strain (µm) | | Total pulses |
| kPa | 100° pulse | last pulse | 100° pulse | last pulse | 100° pulse | last pulse | n° |
| **636** | **28,006** | **28,392** | **3.28** | **3.45** | **45** | **48** | **500,000** |

**Table 32 - Sample 6, Mixture Step IVb "FlowUltraFlex": (2% polymer added in emulsion; 5.66% emulsion)**

| Bituminous mixtures - Test methods for hot bituminous conglomerates - Part 24: Fatigue resistance - Annex E | | | | | | | |
|---|---|---|---|---|---|---|---|
| UNIEN 12697-24 | | | | | | | |
| Applied tension | Stiffness modulus (Mpa) | | Total recovered def. (µm) | | Total recoverable strain (µε) | | Total pulses |
| kPa | 100° pulse | last pulse | 100° pulse | last pulse | 100° pulse | last pulse | n° |
| **633** | **26,264** | **25,909** | **3.64** | **3.85** | **50** | **53** | **500,000** |

**Table 33 - Sample 7, Mixture Step IVb "FlowUltraFlex": (2% polymer added in emulsion; 10.71% emulsion)**

| Bituminous mixtures - Test methods for hot bituminous conglomerates - Part 24: Fatigue resistance - Annex E | | | | | | | |
|---|---|---|---|---|---|---|---|
| UNIEN 12697-24 | | | | | | | |
| Applied tension | Stiffness modulus (Mpa) | | Total recovered def. (µm) | | Total recoverable strain (µε) | | Total pulses |
| kPa | 100° pulse | last pulse | 100° pulse | last pulse | 100° pulse | last pulse | n° |
| **640** | **19,532** | **19,656** | **4.77** | **4.89** | **66** | **68** | **500,000** |

### Analysis of the results

From an analysis of the results shown in tables 27-33, it is possible to observe that:
- **Elastic module** - The products obtained by using the mixture "Eco-FlowMix" (samples 3-4) have a better deformability (the values of Elastic Modul go from approximately 12000 to approximately 6000), by demonstrating the better adaptability of the mixture "Eco-FlowMix" with respect to the highly cement mixture "FlowUltraFlex" (samples 5-7). From this it is clear that a higher content of cement influences malleability and then the elastic modulus; even the addition of bituminous emulsion in an amount equal to approximately 10.71% by weight, with respect to the total weight of the mixture, confers a greater elasticity: however, in case of sample 7, the latter does not result to prevail on the cement, which stiffens the manufactured product.
- Although the product obtained with the mixture 2, without emulsion, does not result to be deformable, it has an incredible fatigue resistance (as it can be seen from the number of total pulses, with respect to those obtained for samples 1, 3 and 4), by demonstrating the advantages linked to the addition of 2% polymer.
- The addition of powder polymer guarantees to sample 3 an elastic modulus having lower stiffness, which decreases at the last pulse; sample 4 demonstrates a higher and increasing elastic modulus in the last pulse.
- **Total deformation (µm)** - Samples 3 and 4, prepared with mixtures "Eco-FlowMix" containing the polymer and the emulsion, are characterized by an optimum deformability in fact the final deformation value doubles with respect to the initial deformation value.
- **Total recoverable deformation (total recoverable strain) (mε)** - is a parameter with a belly-down bridge graph, therefore when the final value doubles with respect to the initial value, the test is interrupted. Samples 3 and 4 have an incredible elasticity since prepared with mixtures containing 10.71% emulsion and 2% polymer ELOTEX^{®} FX3300, which operate in synergy with the ingredients of the Roman hydraulic binder compound cement and fine slag; the sample 7 does not result to be elastic, unlike the above-mentioned ones, due to a greater cement content;
- **Total pulses = fatigue resistance** - Sample 1 not containing polymer has a very low fatigue resistance (the value can be compared with the one of a common bitumen);
   sample 2 has an excellent fatigue resistance however it does not result to be deformable as there is not the emulsion therein;
   sample 4 has a considerable fatigue resistance even if with low cement percentages, thanks to the presence of the polymer;
   samples 5 and 6 have an optimum fatigue resistance thanks to the presence of the polymer but a reduced deformability capability;
   sample 7 has an optimum fatigue resistance but a reduced deformability and malleability due to the greater content of cement than samples 3 and 4.

### Conclusions

The results illustrated in examples 1-2 demonstrate that the materials prepared by using a mixture according to the present invention result to be surprisingly improved (that is they show a high elastic modulus and an extraordinary higher fatigue resistance) than the materials not providing the addition of thermoplastic polymers to the hydraulic binder compound, or consisting of the hydraulic binder (ii) or base (iii) only.

In particular, the above-mentioned comparative tests demonstrate that the addition of the ELOTEX^{®} FX3300 polymer to the mixtures of the invention according to the amounts as defined in the present description and in claims is capable of conferring surprisingly higher fatigue resistances to the resulted products than those of conventional products used in the field (for example sample 1).

By varying the content of bituminous emulsion and of cement within the ranges defined in the present description and claims it is possible to modulate the properties of deformability and malleability of the resulting products (see samples 5-7 with respect to samples 3-4).

### Example 3 - Results of UNIEN 12697-43 standard test

The chemical and mechanical resistances of the materials prepared with the mixture denominated Step IVb, to petrol (Table 34) and diesel (Table 35), were tested according to UNI EN 12697-43 standard test.

**Table 34**

| | Mass loss after immersing the sample in the fuel (%) | Mass loss during brushing with steel for 120 sec (%) |
|---|---|---|
| Step IVb-Test 1 | 0.142 | 0.327 |
| Step IVb- Test 2 | 0.159 | 0.319 |

**Table 35**

| | Mass loss after immersing the sample in the fuel (%) | Mass loss during brushing with steel for 120 sec (%) |
|---|---|---|
| Step IVb- Test 1 | -0.197 | -0.126% |
| Step IVb- Test 2 | 0.037 | 0.103 |

The results illustrated in Tables 34 and 35 demonstrate that the materials prepared with the mixture according to the present invention also show a high resistance to mass loss after immersion in petrol or diesel, as well as after brushing with steel.

### Example 4 - Resistance to bending and compression

The authors of the present invention tested the resistance to bending and the resistance to compression of materials obtained by using the mixtures having the composition specified in example 2 and summarised in the following table 36, according to **UNI EN 1015-11** standard norm.

**Table 36**

| **Tested mixture** | **% emulsion** | **14/06/21** | | **17/06/21** | | **08/07/21** | |
|---|---|---|---|---|---|---|---|
| | | **After 4 days** | | **After 7 days** | | **After 28 days** | |
| | | **Resistance to bending** | **Resistance to compression** | **Resistance to bending** | **Resistance to compression** | **Resistance to bending** | **Resistance to compression** |
| 1. Mixture **"Eco-FlowMix":** no polymer | 10.71% | 1.02 | 1.96 | 1.26 | 2.57 | 1.35 | 3.08 |
| 2. Mixture **"Eco-FlowMix":** 2% polymer | NO emulsion | 1.52 | 6.87 | 2.28 | 9.79 | 2.31 | 10.15 |
| 3. Mixture **"Eco-FlowMix":** 2% polymer added in the hydraulic binder compound | 10.71% | 0.97 | 1.92 | 1.32 | 2.62 | 1.58 | 3.24 |
| 4. Mixture **"Eco-FlowMix":** 2% **polymer** added in the emulsion | 10.71% | 1.34 | 2.80 | 1.94 | 3.66 | 2.13 | 4.78 |
| 5. Step IV-b "FlowUltraFlex": 2% polymer added in the hydraulic binder compound | 5.66% | 4.07 | 14.34 | 5 | 18.76 | 5.51 | 20.27 |
| 6. Step IV-b "FlowUltraFlex"**:** 2% polymer added in emulsion | 5.66% | 4.32 | 14.50 | 4.51 | 17.98 | 5.31 | 21.04 |
| 7. Step IV-b "FlowUltraFlex"**:** 2% polymer added in emulsion | 10.71% | 3.3 | 6.51 | 3.17 | 9.05 | 4.71 | 11.22 |

The results shown in table 36 demonstrate that the materials prepared by using the polymer-based powder ELOTEX^{®} FX3300 have a greater resistance to bending and to compression than the mixtures without added polymer.

The mixtures denominated "FlowUltraflex" have a resistance to compression five times higher than the mixtures denominated "Eco-FlowMix" since the cement content in these mixtures is equal to approximately 50% inside the hydraulic binder compound with respect to 5% of cement in the hydraulic binder compound of the mixture "Eco-FlowMix". Moreover, the resistances to bending are approximately 3 times higher considering that the emulsion percentage (5.66%) is halved with respect to the percentage present in the mixtures "Eco-FlowMix" (10.71%).

### Example 5 - Mixture "Eco-FlowMix" according to an additional embodiment of the invention

The mechanical properties of products obtained by using the mixture shown in the following table were tested both in laboratory and on field. The above-mentioned mixture was prepared by mixing the different ingredients according to the process described in the present application, by using water as solvent in the amounts shown in the following tables.

**Table 37 - Composition of the second mixture denominated "ECO-FLOWMIX"**

| | | | | | |
|---|---|---|---|---|---|
| **HYDRATED LIME** | **6** | **FILLER 36%** | **INERT 56%** | **BITUMINOUS EMULSION 8%** | **W A T E R** |
| **POZZOLANIC FILLER/POZZOLAN** | **10** | | | | |
| **FINE SLAG** | **12** | | | | |
| **CEMENT 52.5** | **12** | | | | |
| **SILICA FUME** (for example ELKEM 920D) | **0.5** | | | | |
| **CARBONATE 2.8 mm** | **7** | | | | |
| **CARBONATE 0.9 mm** | **7.5** | | | | |
| **CARBONATE 0.6 mm** | **4.5** | | | | |
| **CARBONATE 0.3 mm** | **7.5** | | | | |
| **SAND 01-0.5 mm** | **28** | | | | |
| **SUPERFLUIDIFYING ADDITIVE** (for example DEHSCOFIX 158) | **1.1** | | | | |
| **ANTI-SHRINKAGE ADDITIVE** (for example DENKA CSA 20) | **0.9** | | | | |
| **FLUIDIFYING ADDITIVE** (for example MELMENT F10) | **0.5** | | | | |
| **DEAERATING ADDITIVE** (for example SITREN AIRVOID 360) | **0.4** | | | | |
| **ACCELERATING ADDITIVE** (for example CALCIUM FORMATE) | **0.1** | | | | |
| **SODIUM CHLORIDE** | **0.33** | | | | |
| **RICE STARCH/POTATO STARCH** | **0.15** | | | | |
| **CELLULOSE** (for example CULMINAL C8352) | **0.02** | | | | |
| **POLYMER** (for example ELOTEX FX 3300) | **1.5** | | | | |
| **"ECO-FLOWMIX"** | **100.00** | | | | |
| | **100%** | | | | |
| | | | | | **about 10%** |

The mixture having the composition shown in table 37 mixed with 10% water, thanks to the combination of resistance and bending, provides an extremely adhesive product, capable of grasping perfectly to iron, steel and cast iron, then on concretes and asphalts, even in dusty environments.

The fluidity of the product obtained by mixing the mixture "ECO-FLOWMIX" shown in table 37 guarantees even the function of *primer.*

The inventors observed that, once dried, the mixture results to be joined to the road foundation by determining the formation of a protective coating film which maintains its prerogatives by making it effective in preserving the road foundation against attack of water, salts and other agents; apart from the fact that with heat, with respect to the bituminous conglomerates - warm, it does not soften, since it does not gasify.

The obtained product is cheap from the point of view of the amount of cement and other used materials, the production thereof involves consequences in terms of emissions of CO₂ for the environment. It allows an energy saving by using a, cold, bituminous emulsion, diluted by 40% with water. It is performance while using waste by-products useful to reduce the development of hydration heat of the product. It is sustainable since the inert product can also be a recycled product, such as the milled product from pre-existing pavements. Friend of the earth, its colouring (very light, as shown by way of example in Figure 3) improves the solar reflectance, the formulation "ECO-FLOWMIX" is a solution to reduce the greenhouse effect, by contributing to limit the known effect of "heat island".

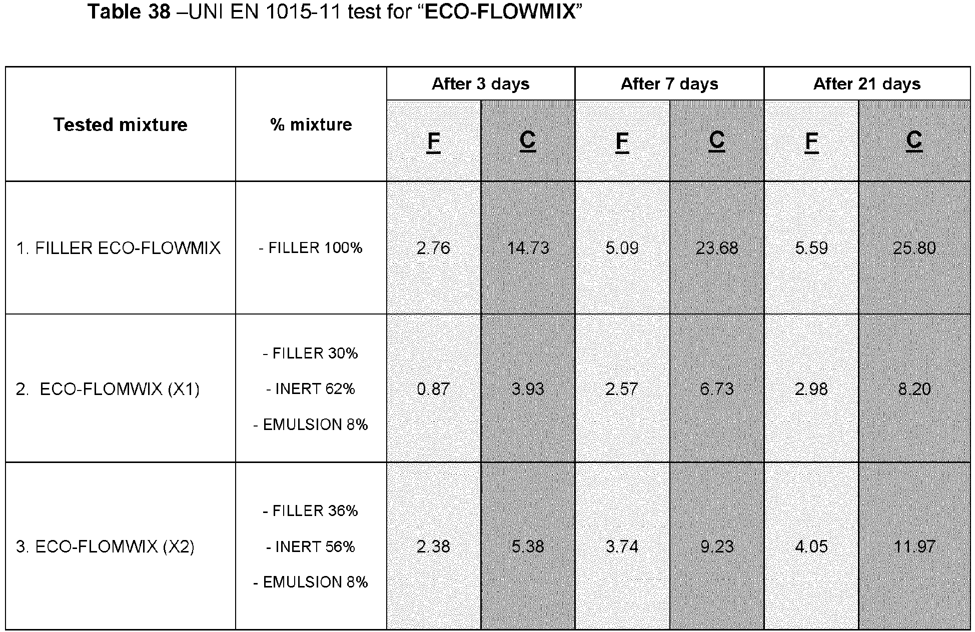

The tests performed according to the parameters of resistance to bending "F" and compression "C" demonstrate improved resistances upon increasing the percentages of the binder filler. The same, if tested singularly, achieves optimum performances; but it is only through the integration of the other components that the mixture "ECO-FLOWMIX" implements the better compromise between stiffness and flexibility, by revealing incredible elasticity as well as high fatigue resistance capabilities.

## Claims

1. A mixture for the realization of structural and/or infrastructural products, comprising:
- one or more inert granular materials in a quantity by weight, determined with respect to the total weight of the mixture, comprised between 45 and 70%, preferably comprised between 48 and 66%, still more preferably comprised between 50 and 62%;
- a hydraulic binder compound in a quantity by weight, determined with respect to the total weight of the mixture, comprised between 20 and 45%, preferably comprised between 30 and 40%;
- a bituminous emulsion in a quantity by weight, determined with respect to the total weight of the mixture, comprised between 2 and 14%, preferably comprised between 4 and 13%, still more preferably comprised between 5 and 11%;
wherein said hydraulic binder compound comprises at least the following components: (i) cement and optionally calcium hydroxide in a quantity by weight, determined with respect to the total weight of said hydraulic binder compound, comprised between 4 and 60%;
(ii) one or more thermoplastic polymers in a quantity by weight, determined with respect to the total weight of said hydraulic binder compound, comprised between 1% and 5%; and
(iii) one or more auxiliary materials comprising at least one among: sand, pozzolana, silica, limestone, cellulose, silica fume, fine slag, corn starch, rice starch, potato starch, fibres, fluorine or phosphate salts, sodium chloride, or combinations thereof, in a quantity by weight, determined with respect to the total weight of said hydraulic binder compound, comprised between 40 and 95%; and
wherein said one or more thermoplastic polymers are homopolymers or copolymers formed by monomers selected in the group comprising vinyl acetate, ethylene, vinyl versatate, styrene, butadiene, and/or mixtures thereof, preferably wherein said one or more polymers are copolymers of ethylene and vinyl acetate or copolymers of ethylene, vinyl acetate and vinyl versatate.

2. The mixture according to claim 1, wherein:
- said one or more inert granular materials are present in a quantity by weight, determined with respect to the total weight of the mixture, comprised between 45 and 67%;
- said hydraulic binder compound is present in a quantity by weight, determined with respect to the total weight of the mixture, comprised between 23 and 44%; and
- said bituminous emulsion in a quantity by weight, determined with respect to the total weight of the mixture, comprised between 4 and 12%.

3. The mixture according to claim 1, wherein:
- said one or more inert granular materials are present in a quantity by weight, determined with respect to the total weight of the mixture, comprised between 45 and 60%;
- said hydraulic binder compound is present in a quantity by weight, determined with respect to the total weight of the mixture, comprised between 28 and 44%; and
- said bituminous emulsion in a quantity by weight, determined with respect to the total weight of the mixture, comprised between 4 and 12%.

4. The mixture according to any one of claims 1 to 3, wherein said one or more thermoplastic polymers are present in a quantity by weight, determined with respect to the total weight of said hydraulic binder compound, comprised between 1 and 3%, preferably equal to 1.5% or to 2%.

5. The mixture according to any one of claims 1 to 4, wherein said hydraulic binder compound is obtained by means of at least a step of pre-mixing of (i) said cement and optionally calcium hydroxide, with (ii) said one or more polymers and with (iii) said one or more auxiliary materials.

6. The mixture according to any one of claims 1 to 5, wherein said bituminous emulsion is a slow break bituminous emulsion and comprises a quantity of water by weight, determined with respect to the total weight of the bituminous emulsion, comprised between 40% and 60%.

7. The mixture according to any one of claims 1 to 6, wherein said bituminous emulsion is a cold bituminous emulsion, preferably it is a slow break cationic emulsion.

8. The mixture according to any one of claims 1 to 7 further comprising one or more complementary substances selected among retardant, accelerator, super fluidifying, deaerating, thickening, anti-shrinkage, anti-segregating and/or water reducing substances.

9. The mixture according to any one of claims 1 to 8 wherein said mixture comprises:
- one or more inert granular materials in a quantity by weight, determined with respect to the total weight of the mixture, comprised between approximately 45 and 67% by weight, preferably equal to 56%;
- a hydraulic binder compound in a quantity by weight, determined with respect to the total weight of the mixture, comprised between approximately 28 and 44% by weight, preferably equal to 36%;
- a slow break cationic bituminous emulsion in a quantity by weight, determined with respect to the total weight of the mixture, comprised between approximately 4 and 12%, preferably equal to 8%;
wherein said hydraulic binder compound comprises cement in an amount between 5 and 25% by weight, calcium hydroxide, a copolymer based on vinyl acetate, ethylene, vinyl versatate in an amount equal to 1.5% by weight and one or more auxiliary materials comprising sand, pozzolana and fine slag in an amount comprised between 50 and 90% by weight, with respect to the total weight of said hydraulic binder compound.

10. A use of a mixture according to any one of claims 1 to 9 for the realization of structural and/or infrastructural products, comprising the combination of said mixture with an aqueous solvent so as to obtain a substantially homogeneous mixture mouldable for the realization of said products.

11. A process for the production of a mixture for the realization of structural and/or infrastructural products, comprising at least the following steps:
a. preparing a hydraulic binder compound by mixing (i) cement and optionally calcium hydroxide in a quantity by weight, determined with respect to the total weight of said hydraulic binder compound, comprised between 4 and 60%; with (ii) one or more thermoplastic polymers in a quantity by weight, determined with respect to the total weight of said hydraulic binder compound, comprised between 1% and 5%, and (iii) with one or more auxiliary materials comprising at least one among: sand, pozzolana, silica, limestone, cellulose, silica fume, fine slag, corn starch, rice starch, potato starch, fibres, fluorine or phosphate salts, sodium chloride, or combinations thereof, in a quantity by weight, determined with respect to the total weight of said hydraulic binder compound, comprised between 40 and 95%; and
b. mixing the hydraulic binder compound obtained in step a. with one or more inert granular materials and with a bituminous emulsion so as to obtain said mixture; said hydraulic binder compound being in a quantity by weight, determined with respect to the total weight of the mixture, comprised between 20 and 45%, preferably comprised between 30 and 40%, said one or more inert granular materials being in a quantity by weight, determined with respect to the total weight of the mixture, comprised between 45 and 70%, preferably comprised between 48 and 66%, still more preferably comprised between 50 and 62%, and said bituminous emulsion being in a quantity by weight, determined with respect to the total weight of the mixture, comprised between 2 and 14%, preferably comprised between 4 and 13%, still more preferably comprised between 5 and 11%; and
wherein said one or more thermoplastic polymers are homopolymers or copolymers formed by monomers selected in the group comprising vinyl acetate, ethylene, vinyl versatate, styrene, butadiene, and/or mixtures thereof, preferably wherein said one or more polymers are copolymers of ethylene and vinyl acetate or copolymers of ethylene, vinyl acetate and vinyl versatate.

12. The process according to claim 11, wherein in step b. said hydraulic binder compound is in a quantity by weight, determined with respect to the total weight of the mixture, comprised between 23 and 44%, said one or more inert granular materials are in a quantity by weight, determined with respect to the total weight of the mixture, comprised between 45 and 67% and said bituminous emulsion is in a quantity by weight, determined with respect to the total weight of the mixture, comprised between 4 and 12%.

13. The process according to claim 11, wherein in step b. said hydraulic binder compound is in a quantity by weight, determined with respect to the total weight of the mixture, comprised between 28 and 44%, and said one or more inert granular materials are in a quantity by weight, determined with respect to the total weight of the mixture, comprised between 45 and 60% and said bituminous emulsion is in a quantity by weight, determined with respect to the total weight of the mixture, comprised between 4 and 12%.

14. The process according to any one of claims 11 to 13, further comprising a step c. of adding an aqueous solvent, preferably water, in an amount comprised between 5 and 12% with respect to the total weight of the mixture, preferably between 5 and 8% with respect to the total weight of the mixture, preferably equal to approximately 5% by weight or equal to approximately 10% by weight, or still in an amount between 6.5% and 8% with respect to the total weight of the mixture.

15. The process according to any one of claims 11 to 14, further comprising a step of adding to said mixture one or more complementary substances selected among retardant, accelerator, super fluidifying, deaerating, thickening, anti-shrinkage, anti-segregating and/or water reducing substances.
